# EUROPÄISCHE PATENTSCHRIFT

(11) **EP 2 841 970 B1**
(45) Veröffentlichungstag und Bekanntmachung des Hinweises auf die Patenterteilung: **08.11.2017**
(21) Anmeldenummer: 13723010.8
(22) Anmeldetag: 22.04.2013
(51) Int. Cl.: G02B 1/04, C08G 18/42, C08G 18/48, C08G 18/50, C08L 75/06, C08L 75/08, C08G 18/72, C08G 18/73, C08G 18/75, C08G 18/78, C08G 18/79

(54) **LICHTECHTE POLYURETHANZUSAMMENSETZUNG**
LIGHT-RESISTANT POLYURETHANE COMPOUND
COMPOSITION STABLE À LA LUMIÈRE DE POLYURÉTHANE

(30) Priorität: 23.04.2012 EP 12165171
(43) Veröffentlichungstag der Anmeldung: 04.03.2015
(73) Patentinhaber: Covestro Deutschland AG, 51373 Leverkusen (DE)
(72) Erfinder: GRESZTA-FRANZ, Dorota, 42659 Solingen (DE); LAAS, Hans, Josef, 51519 Odenthal (DE); NEFZGER, Hartmut, 50259 Pulheim (DE); KRAUSE, Jens, 51375 Leverkusen (DE)
(74) Vertreter: Gille Hrabal
(86) Internationale Anmeldenummer: PCT/EP2013/058256
(87) Internationale Veröffentlichungsnummer: WO 2013/160226

(56) Entgegenhaltungen:
- EP-A1- 0 816 411
- EP-A1- 1 657 267
- EP-A2- 2 455 409
- WO-A1-02/098942
- WO-A1-2011/078366
- WO-A2-2006/134488
- WO-A2-2007/133407
- US-A- 5 869 566
- US-A- 6 136 455

## Beschreibung

Die Erfindung betrifft Zusammensetzungen, welche zu lichtechten Polyurethanen gehärtet werden können und insbesondere zur Herstellung optischer Linsen geeignet sind.

Transparente Kunststoffe ersetzen heute in vielen Bereichen Glas bei der Herstellung optischer Bauteile. Auch bei optischen Linsen wie Brillengläsern können polymere Werkstoffe ihre Vorteile hinsichtlich geringen Gewichts, höherer Bruchfestigkeit und leichter Verarbeitbarkeit ausspielen, weshalb sie das traditionell verwendete Mineralglas mehr und mehr substituieren.

Die industrielle Herstellung organischer Brillengläser aus duromeren Kunststoffen erfolgt nach einem speziellen Gießverfahren, bei dem flüssige Reaktionsgemische mit Additiven, wie z. B. UV-Absorbern, versetzt, bei Temperaturen möglichst weit unterhalb ihrer Aushärtetemperatur in gläserne Gießformen eingefüllt und anschließend in einem exakt temperierten Prozess über viele Stunden ausgehärtet werden.

Als Standardmaterial zur Herstellung von Kunststoffbrillengläsern dient seit vielen Jahren Polyallyldiglycolcarbonat (PADC), das durch radikalische Polymerisation von Allyldiglykolcarbonat (ADC) erhältlich ist. Gläser aus PADC besitzen hervorragende optische Eigenschaften und sind bis zu 20 % leichter als vergleichbare Mineralgläser. Mit einem Brechungsindex von 1,50 und der hohen Abbe-Zahl 58 dienen sie insbesondere zur Korrektur von Fehlsichtigkeiten im niedrigen Bereich von bis zu ± 2 Dioptrien.

Trotz ihrer weiten Verbreitung weisen Brillengläser aus PADC aber auch einige technologische Nachteile auf. Sie sind beispielsweise aufgrund ihrer gegenüber anderen Kunststoffen geringeren mechanischen und thermischen Festigkeiten, insbesondere der höheren Sprödigkeit, der vergleichsweise niedrigen Glasübergangstemperatur und Wärmeformbeständigkeit (HDT), für randlose und teilrandlose Brillen (Bohrbrillen) nicht geeignet, sondern können in der Regel nur in Vollrand-Fassungen eingesetzt werden. Darüber hinaus lässt sich auch eine Absorption von UV-Strahlung einer Wellenlänge von < 400 nm, wie sie für Brillen im Alltagsgebrauch zum Schutz des Auges angestrebt wird, mit diesem Material nicht realisieren.

Deutlich bessere mechanische und thermische Eigenschaften zeigen dagegen die zur Herstellung extrem schlagzäher Brillengläser eingesetzten transparenten Polyurethanharnstoffe, die sich beispielsweise gemäß WO 2000/014137 aus Polyurethanprepolymeren auf Basis aliphatischer und/oder cycloaliphatischer Diisocyanate und mindestens einem aromatischen Diamin oder nach WO 2004/076518 durch Aushärtung von Isocyanatprepolymeren mit Vernetzergemischen, welche hydroxyfunktionelle Polyurethanprepolymere und aromatische Diamine umfassen, erhalten lassen.

Die Verwendung aromatischer Diamine als Kettenverlängerer ermöglicht nach den vorstehenden Verfahren zwar die Herstellung von Kunststoffgläsern mit den gewünschten hohen Härten und Wärmeformbeständigkeiten, führt gleichzeitig aber zu einer unzureichenden Farbstabilität, Eine Vergilbung der Gläser lässt sich zwar für eine begrenzte Zeit durch Zusatz hoher Mengen an UV-Stabilisatoren und Antioxidantien, wie beispielsweise in WO 2008/033659 beschrieben, zurückdrängen, tritt früher oder später aber unvermeidlich auf.

Ein weiterer, auf die Verwendung aromatischer Aufbaukomponenten zurückzuführender Nachteil ist der gegenüber dem Industriestandard PADC deutlich erhöhte Brechungsindex von ca. 1,53.

Zweikomponentige Polyurethanzusammensetzungen zur Herstellung optischer Materialien, bei denen cycloaliphatische Diisocyanate oder deren Prepolymere in Gegenwart von Katalysatoren mit Polyolen ausgehärtet werden, sind aus WO 2007/015273, WO 2008/092597 und WO 2010/043392 bekannt. Aus diesen Polyurethanen hergestellte Brillengläser sind vergilbungsstabil und weisen einen Brechungsindex im Bereich von 1,50 auf, welcher somit ähnlich dem von PADC ist. Die Wärmeformbeständigkeit dieser Harnstoffgruppen-freien Systeme ist allerdings nicht ausreichend. Darüber hinaus neigen Prepolymere cycloaliphatischer Diisocyanate, wie in WO 2009/059848 beschrieben, zur Kristallisation und Eintrübung, was die Verarbeitung zu qualitativ hochwertigen optischen Bauteilen erschwert.

Dem Fachmann auf dem Gebiet der Polyurethanchemie ist bekannt, dass Isocyanuratstrukturen thermisch und hydrolytisch wesentlich stabiler sind als Urethangruppen (siehe z. B. "Methoden der organischen Chemie" (Houben-Weyl) Bd. E20, Makromolekulare Stoffe, Georg Thieme Verlag Stuttgart 1987, S. 1740). Es hat daher nicht an Versuchen gefehlt, zur Verbesserung der Eigenschaften transparenter Polyurethane, wie z. B. der Temperaturbeständigkeit, Polyisocyanuratpolyisocyanate einzusetzen.

So beschreibt beispielsweise die DE-A 2900031 transparente Polyurethanformkörper mit erhöhter Wärmeformbeständigkeit aus einer Mischung aus monomerem und trimerem Isophorondiisocyanat (IPDI) und Polyolgemischen. Die so erhältlichen Formkörper sind allerdings außerordentlich spröde, nicht schlagfest und somit als Brillenglasmaterial ungeeignet.

EP-A 0 943 637 beschreibt Umsetzungen eines oligomeren Trimerisats auf Basis von Hexamethylendiisocyanat (HDI), sowie einer Abmischung dieses HDI-Trimerisats mit monomerem Isophorondiisocyanat mit speziellen Gemischen aus Polyether- und Polyesterpolyolen zu kompakten, transparenten Polyadditionsprodukten, die als Glasersatz dienen können. Die erhaltenen Formkörper eignen sich zwar zur Herstellung einfacher Polyurethanverscheibungen, wie Scheiben oder Leuchtkörperabdeckungen im Immobilen-, Automobil- oder Flugzeugbau, weisen jedoch nicht die für optische Linsen, wie Brillengläser, erforderliche optische Qualität auf.

Zweikomponentige Polyurethan-Zusammensetzungen zur Herstellung transparenter Vergussmassen, insbesondere optischer Linsen, nach dem "Reaction Injection Moulding" (RIM)-Verfahren sind Gegenstand der EP-A 1 657 267. Dabei werden als Polyisocyanatkomponenten Gemische von mindestens einem Isocyanuratgruppen enthaltenden Polyisocyanat mit mindestens einem weiteren monomeren Diisocyanat mit Diole enthaltenden Polyolkomponenten, vorzugsweise ausschließlich mit Diolen umgesetzt. Die Verwendung von Diolen als Reaktionspartner für die höherfunktionellen Polyisocyanate ist bei der Verarbeitung nach dem RIM-Verfahren zwingend notwendig, um Formteildefekte, wie z. B. die Bildung von Fließlinien oder Schlieren, zu unterbinden. Dieses Verfahren liefert transparente Polyurethane, deren Brechungsindex im Bereich von 1,52 und damit höher als der des Industriestandards PADC liegt.

DE 10 2009 047 214 beschreibt die Umsetzung einer Mischung aus trimerisiertem HDI und unterschüssigen Gewichtsanteilen an trimerisiertem IPDI mit speziellen, vergleichsweise niedermolekularen Polyetherpolyolgemischen zu transparenten kompakten Polyurethanen, die vorzugsweise als Beschichtungsmittel von Flächen für Autoinnenraumanwendungen zum Einsatz kommen. Eine Eignung als transparentes Überzugsmittel bedeutet jedoch nicht, dass solche Polyurethansysteme auch die hohen Anforderungen an entsprechende Systeme in optische Anwendungen erfüllen. Ähnliches gilt für die Polyurethan-Bindemittelgemische, welche in EP-A 1 484 350 beschrieben werden, sowie den Polyurethan-Beschichtungsmittel der EP-A 0 693 512, EP-A 1 721 920, WO 02/098942 A1, US 5,869,566, US 6,136,455, WO 2007/133407 A2 und EP-A 0 649 866 und den Polyurethan-Lacken der EP-A 0 336 205 und EP-A 0 816 411,

Aus der WO 2010/083958 sind spezielle lösemittelfreie Polyisocyanatgemische aus mindestens einem monomerarmen HDI-Polyisocyanat und aus mindestens einem monomerarmen Polyisocyanat auf Basis cycloaliphatischer Diisocyanate, wie z. B. IPDI, bekannt, die sich zur Herstellung harter lichtechter Polyurethan- und/oder Polyharnstoff-Körper für eine Vielzahl unterschiedlicher Anwendungen, unter anderem auch zur Herstellung von Brillengläsern und optischen Linsen eignen. Die beschriebenen Polyisocyanatgemische besitzen allerdings bei ausreichend hohem Gehalt an cycloaliphatischen Polyisocyanaten, wie sie zum Erreichen der geforderten Wärmeformbeständigkeiten benötigt werden, derart hohe Viskositäten, dass sie nach den in der Brillenindustrie etablierten, einfachen Giessverfahren nicht verarbeitet werden können.

Es sind bisher keine geeigneten Polymere bekannt, die PADC als industrielles Standardmaterial zur Herstellung von Brillengläsern ablösen könnten.

Es bestand somit ein großes Interesse daran, einen Kunststoff bereit zu stellen, welcher die Vorteile von Kunststoffen gegenüber Mineralglas aufweist, dabei den optischen Eigenschaften von PADC möglichst nahe kommt und gleichzeitig verbesserte mechanische und thermische Eigenschaften aufweist. Außerdem sollten die erhaltenen Kunststoffe insbesondere lichtecht und vergilbungsstabil sein. Des Weiteren sollte der Kunststoff gegebenenfalls durch Additivierung bzw. Zugabe weiterer Hilfs- und/oder Zusatzmittel UV-Strahlung insbesondere einer Wellenlänge von < 400 nm vollständig blockieren können. Dadurch sollten diese Kunststoffe insbesondere für den Gebrauch in optischen Anwendungen wie optischen Linsen geeignet sein. Der Kunststoff sollte somit insbesondere geeignet sein für die Verwendung als Brillenglas. Außerdem sollten die Ausgangskomponenten vorzugsweise ausreichend niedrige Viskosität aufweisen, um, wie ADC, in einem Gießprozess Anwendung finden zu können. Damit würde ein solcher Kunststoff insbesondere in den in der Brillenglasindustrie etablierten Gießverfahren verwendet werden können.

Gelöst werden diese Aufgaben durch die Bereitstellung der nachfolgend beschriebenen Zusammensetzung, ihrer Verwendung sowie dem Verfahren zur Herstellung transparenter Materialien.

Die erfindungsgemäße Zusammensetzung enthält
A) 10 bis weniger als 50 Gew,-% mindestens eines oligomeren Polyisocyanates a-1) auf Basis von Hexamethylendiisocyanat
   und
   mehr als 50 bis 90 Gew,-% mindestens eines Polyisocyanates a-2) auf Basis von Isophorondiisocyanat, enthaltend monomeres Isophorondiisocyanat und mindestens ein oligomeres Polyisocyanat auf Basis von Isophorondiisocyanat,
   wobei die %-Angaben auf die Summe der Komponenten a-1) und a-2) bezogen sind,
B) mindestens eine gegenüber Isocyanatgruppen reaktive Komponente, ausgewählt aus der Gruppe, bestehend aus Polyesterpolyol, Polyetherpolyol und Mischungen daraus,
   sowie gegebenenfalls
C) ein oder mehrere Hilfs- und/oder Zusatzmittel.

Es hat sich überraschenderweise herausgestellt, dass unter Verwendung genau definierter Gemische aus mindestens einem oligomeren Polyisocyanaten auf Basis von Hexamethylendiisocyanat (HDI) und einer Polyisocyanatkomponente auf Basis von Isophorondiisocyanat, enthaltend monomeres Isophorondiisocyanat (IPDI) und mindestens ein oligomeres Polyisocyanat auf Basis von IPDI, mit einer gegenüber Isocyanatgruppen reaktiven Komponente, ausgewählt aus der Gruppe, bestehend aus Polyesterpolyol, Polyetherpolyol und Mischungen daraus, Kunststoffe erhalten werden können, welche die für optische Anwendungen gewünschten Eigenschaften bei gleichzeitig guten mechanischen sowie thermischen Eigenschaften aufweisen. Diese Kunststoffe weisen im Vergleich zu Glas insbesondere eine geringere Dichte, eine höhere Bruchfestigkeit sowie eine leichtere Verarbeitbarkeit auf. Die optischen Eigenschaften der erhaltenen Kunststoffe sind vergleichbar mit denen von PADC. Sie weisen insbesondere einen Brechungsindex im Bereich von 1,50 auf. Des Weiteren liegen aber auch die Abbe-Zahlen sowie die Transmission in dem Bereich, welcher auch mit PADC erzielt wird. Die erhaltenen Kunststoffe sind des Weiteren lichtecht und vergilbungsstabil. Ebenso ist der erhaltene Kunststoff durch Additivierung bzw. Zugabe weiterer Hilfs- und/oder Zusatzmittel geeignet, UV-Strahlung insbesondere einer Wellenlänge von < 400 nm vollständig blockieren zu können. Ebenso sind die erhaltenen Kunststoffe nicht spröde. Sie weisen höhere Glasübergangstemperaturen und hohe Wärmeformbeständigkeiten auf.

Diese optischen, mechanischen und thermischen Eigenschaften begründen, dass der erfindungsgemäße Kunststoff für den Gebrauch in optischen Anwendungen wie optischen Linsen geeignet ist. Insbesondere ist der Kunststoff für die Verwendung als Brillenglas geeignet.

Gleichzeitig weisen die Ausgangskomponenten eine niedrige Viskosität auf, so dass die erfindungsgemäße Zusammensetzung in einem Gießprozess angewendet werden kann. Insbesondere die Anwendung dieser Zusammensetzung in denen in der Brillenglasindustrie etablierten Gießverfahren kann bewerkstelligt werden.

### Komponente A)

Die Komponente A) der erfindungsgemäßen Zusammensetzung umfasst 10 bis weniger als 50 Gew,-%, bevorzugt 10 bis 49 Gew,-%, bevorzugter 10 bis 45 Gew,-%, noch bevorzugter 15 bis 35 Gew,-%, ganz besonders bevorzugt 20 bis 30 Gew,-% mindestens eines oligomeren Polyisocyanats a-1) auf Basis von Hexamethylendiisocyanat und mehr als 50 bis 90 Gew,-%, bevorzugt 51 bis 90 Gew,-%, bevorzugter 55 bis 90 Gew,-%, noch bevorzugter 65 bis 85 Gew,-%, ganz besonders bevorzugt 70 bis 80 Gew,-% mindestens eines Polyisocyanates a-2) auf Basis von Isophorondiisocyanat, enthaltend monomeres Isophorondiisocyanat und mindestens ein oligomeres Polyisocyanat auf Basis von Isophorondiisocyanat, wobei die %-Angaben auf die Summe der Komponenten a-1) und a-2) bezogen sind.

Unter dem Begriff Polyisocyanat wird im Allgemeinen eine chemische Verbindung verstanden, welche zwei oder mehr Isocyanatgruppen aufweist. Daher werden auch Diisocyanate wie HDI oder IPDI gemeinhin als Polyisocyanate bezeichnet, da sie mehr als eine Isocyanatgruppe tragen. Auf dem Gebiet der aliphatischen bzw. cycloaliphatischen Polyisocyanate werden jedoch im Allgemeinen monomere Diisocyanate wie HDI und IPDI noch nicht als Polyisocyanate bezeichnet, sondern erst die daraus mit Hilfe geeigneter Modifizierungsreaktionen, wie z. B. Trimerisierung oder Biuretisierung, hergestellten höhermolekularen oligomeren Polyisocyanate. Danach stellen HDI und IPDI die Ausgangsdiisocyanate zur Herstellung der entsprechenden Polyisocyanate dar. Die vorliegende Patentanmeldung verwendet den Begriff Polyisocyanat daher insbesondere zur Bezeichnung eines oligomeren Polyisocyanates.

Oligomere Polyisocyanate sind insbesondere solche Polyisocyanate, in welchen mindestens zwei im Allgemeinen gleiche Diisocyanat-Einheiten unter Umsetzung eines Teils der Isocyanatgruppen gegebenenfalls unter Zusatz von beispielsweise ein- oder mehrwertigen Alkoholen, miteinander verbunden werden. Besonders bevorzugt handelt es sich bei oligomeren Polyisocyanaten um Dimere, Trimere oder Mischungen von Dimeren und Trimeren eines Diisocyanate, Dies bedeutet insbesondere, dass die oligomeren Polyisocyanate eine größere Molmasse aufweisen als die entsprechenden Diisocyanate. Ein oligomeres Polyisocyanat auf Basis von HDI weist somit bevorzugt eine höhere Molmasse als 168,20 g/mol auf. Ein oligomeres Polyisocyanat auf Basis von IPDI weist bevorzugt eine höhere Molmasse als 222,29 g/mol auf. Im Sinne der vorliegenden Erfindung ist es besonders bevorzugt, dass die oligomeren Polyisocyanate erhalten werden, indem ausschließlich ein Diisocyanat einer Sorte (d. h. entweder ausschließlich HDI oder ausschließlich IPDI) als Diisocyanat-Einheit umgesetzt wird. Dabei ist es ebenso bevorzugt, dass die oligomeren Polyisocyanate keine Präpolymere sind. Dies bedeutet insbesondere, dass bevorzugt die Molmasse des oligomeren Polyisocyanates oder Polydiisocyanates erhalten durch die Umsetzung ausschließlich einer Diisocyanatsorte als Diisocyanat-Einheit eine Molmasse von unter 1500 g/mol aufweist.

Abhängig von der Art der verwendeten Reaktionsbedingungen können dabei unterschiedliche Verknüpfungen der Diisocyanat-Einheiten auftreten. Weiterhin schließen die oligomeren Polyisocyanate auch Umsetzungsprodukte von Diisocyanaten mit bevorzugt niedermolekularen Polyolen ein (Urethane). Solche Polyole weisen bevorzugt einen Molekulargewichtsbereich von 62 bis 400 g/mol auf.

Bevorzugt werden dabei Uretdion-, Isocyanurat-, Iminooxadiazindion-, Urethan-, Allophanat-, Biuret- und/oder Oxadiazintriongruppen gebildet, Im Folgenden werden oligomere Polyisocyanate, welche mindestens eine dieser genannten Gruppen aufweisen, auch teilweise als "Derivate" des entsprechenden Diisocyanates bezeichnet.

Im Allgemeinen fallen die oligomeren Polyisocyanate bei der Synthese nicht in Form definierter Verbindungen an, sondern als Mischungen verschiedener Oligomere, die eine Molekulargewichtsverteilung aufweisen. Die oligomeren Polyisocyanate schließen insbesondere die folgenden Strukturtypen ein (siehe dazu auch: Nachrichten aus der Chemie, 55, 380-384, 2007): 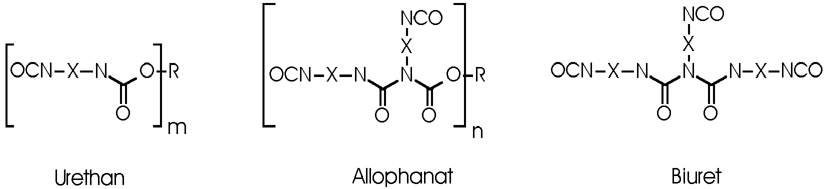 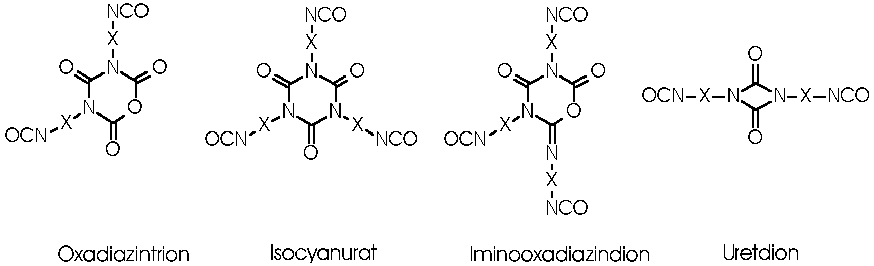
wobei X insbesondere die folgenden Bedeutungen haben kann: 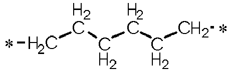 , wenn es sich um ein oligomeres Polyisocyanat auf Basis von HDI handelt oder 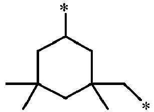 , wenn es sich um ein oligomeres Polyisocyanat auf Basis von IPDI handelt;
R ein beliebiger organischer Rest sein kann,
n eine ganze Zahl zwischen 1 und 10, bevorzugt 2 oder 3 ist
und m eine ganze Zahl zwischen 2 und 10, bevorzugt 2 oder 3 ist und Mischungen dieser Strukturtypen.

Die oligomeren Polyisocyanate weisen mindestens zwei, besonders bevorzugt mindestens drei Isocyanatgruppen pro Molekül auf (NCO-Funktionalität),

### Oligomere Polyisocyanatkomponente a-1)

Bei den oligomeren Polyisocyanaten a-1) auf Basis von HDI handelt es sich vorzugsweise um die an sich bekannten Derivate des HDIs, welche ausgewählt werden aus der Gruppe, bestehend aus Uretdion-, Isocyanurat-, Iminooxadiazindion-, Urethan-, Allophanat-, Biuret-, Oxadiazintriongruppen enthaltende Derivate und Mischungen solcher Derivate. Diese Derivate und ihre Herstellungsverfahren sind beispielhaft in Laas et al., J. Prakt. Chem. 336, 1994, 185-200, der DE-A 1 670 666, DE-A 3 700 209, DE-A 3 900 053, EP-A 0 330 966, EP-A 0 336 205, EP-A 0 339 396 und EP-A 0 798 299 beschrieben. Bevorzugt handelt es sich bei der oligomeren Polyisocyanatkomponente a-1) auf Basis von HDI um Derivate des HDIs, welche Biuret-, Isocyanurat- und/oder Iminooxadiazindionstrukturen aufweisen. Besonders bevorzugt handelt es sich bei der oligomeren Polyisocyanatkomponente a-1) auf Basis von HDI um Derivate des HDIs, welche Isocyanuratgruppen- und/oder Iminooxadiazindiongruppen aufweisen.

Das zur Herstellung der oligomeren Polyisocyanate a-1) auf Basis von HDI eingesetzte HDI wird bevorzugt durch Phosgenierung von Hexamethylendiamin hergestellt. Zur Herstellung der oligomeren Polyisocyanate a-1) auf Basis von HDI kann aber auch HDI eingesetzt werden, das durch thermische Spaltung der Urethanbindungen von auf phosgenfreiem Weg erhaltenen Diurethanen des HDIs hergestellt wurde.

In einer bevorzugten Ausführungsform der vorliegenden Erfindung weist die oligomere Polyisocyanatkomponente a-1) auf Basis von HDI einen Gehalt an monomerem HDI von weniger als 0,5 Gew,-% bezogen auf die gesamte Polyisocyanatkomponente a-1) auf Basis von HDI auf.

Die oligomere Polyisocyanatkomponente a-1) auf Basis von HDI weist bei 23°C bevorzugt eine Viskosität von 100 bis 3 500 mPa·s, bevorzugt von 600 bis 3 000 mPa·s, besonders bevorzugt von 600 bis 1 500 mPa·s auf. Der Gehalt an Isocyanatgruppen der oligomeren Polyisocyanatkomponente a-1) auf Basis von HDI beträgt bevorzugt von 20 bis 24 Gew,-%, besonders bevorzugt von 21 bis 24 Gew,-%, ganz besonders bevorzugt 22 bis 24 Gew,-%, Die oligomere Polyisocyanatkomponente a-1) auf Basis von HDI weist eine durchschnittliche Isocyanat-Funktionalität pro Molekül von mindestens 2,0 auf.

Besonders bevorzugt handelt es sich bei den Polyisocyanaten der Komponente a-1) auf Basis von HDI um ein Derivat des HDIs, welches Isocyanuratgruppen- und/oder Iminooxadiazindiongruppen aufweist, mit einer Viskosität bei 23°C von 600 bis 1.500 mPa·s und einem Gehalt an Isocyanatgruppen von 22 bis 24 Gew,-%.

### Polyisocyanatkomponente a-2)

Die Polyisocyanatkomponente a-2) auf Basis von IPDI enthält monomeres IPDI und mindestens ein oligomeres Polyisocyanat auf Basis von IPDI.

Unter dem Begriff "enthalten" wird in Bezug auf die Polyisocyanatkomponente a-2) auf Basis von IPDI bevorzugt "im Wesentlichen bestehen aus" verstanden. Dies bedeutet, dass die Polyisocyanatkomponente a-2) auf Basis von IPDI besonders bevorzugt im Wesentlichen aus monomerem IPDI und mindestens einem oligomeren Polyisocyanat auf Basis von IPDI besteht. Dabei kann die Polyisocyanatkomponente a-2) auf Basis von IPDI gängige Verunreinigungen, die beispielsweise bei der Herstellung von IPDI und/oder bei der Herstellung von oligomeren Polyisocyanat auf Basis von IPDI häufig auftreten, zu einem geringen Anteil aufweisen.

Bei dem oligomeren Polyisocyanat auf Basis von IPDI handelt es sich vorzugsweise um ein Derivat, welches ausgewählt wird aus der Gruppe, bestehend aus Derivaten mit Biuret-, Isocyanuratstrukturen und Mischungen daraus.

Die Herstellung dieser Polyisocyanatkomponenten a-2) auf Basis von IPDI kann insbesondere ausgehend von monomerem IPDI mit Hilfe an sich bekannter Verfahren zur Biuretisierung und/oder Trimerisierung durch Umsetzung eines Teils der ursprünglich im IPDI vorhandenen Isocyanatgruppen unter Bildung oligomerer Polyisocyanatmoleküle erfolgen.

Geeignet sind beispielsweise die üblichen Verfahren zur katalytischen Trimerisierung von Isocyanaten unter Bildung von Isocyanuratstrukturen oder zur Biuretisierung von Diisocyanaten, wie sie z. B. in Laas et al., J. Prakt. Chem. 336, 1994, 185-200 beispielhaft beschrieben sind. Weitere Beschreibungen geeigneter IPDI-Polyisocyanate finden sich z. B. auch in der EP-A 0 003 765, EP-A 0017 998 und DE-A 2 644 684,

Das zur Herstellung der Polyisocyanatkomponenten a-2) auf Basis von IPDI eingesetzte IPDI wird bevorzugt durch Phosgenierung von Isophorondiamin hergestellt. Zur Herstellung der Polyisocyanatkomponenten a-2) auf Basis von IPDI kann aber auch IPDI eingesetzt werden, das durch thermische Spaltung der Urethanbindungen von auf phosgenfreiem Weg erhaltenen Diurethanen des IPDIs hergestellt wurde. Unabhängig von der oben geschilderten Art der gewählten Oligomerisierungsreaktion (Trimerisierung und/oder Biuretisierung) kann somit in dieser Ausführungsform bei der Herstellung der erfindungsgemäß eingesetzten Polyisocyanatkomponenten a-2) auf Basis von IPDI wie folgt vorgegangen werden:
Herstellung 1; Anders als beispielsweise bei der Herstellung von Lackpolyisocyanaten üblich und in der vorstehend zitierten Patentliteratur beschrieben, kann nach erfolgter Oligomerisierung vorzugsweise auf die Abtrennung des nicht umgesetzten monomeren IPDIs verzichtet werden. Auf diese Weise ist es möglich, klare, im Wesentlichen farblose, Isocyanurat- und/oder Biuretgruppen enthaltende Lösungen umfassend monomeres IPDI und mindestens ein oligomeres Polyisocyanat auf Basis von IPDI zu erhalten. Hierbei handelt es sich um eine bevorzugte Vorgehensweise. Diese ermöglicht es, die Polyisocyanatkomponente a-2) auf Basis von IPDI in einem Verfahrensschritt herzustellen.
Herstellung 2: In einer alternativen Variante erfolgt die Herstellung der Polyisocyanatkomponente a-2) auf Basis von IPDI, indem zunächst mindestens ein oligomeres Polyisocyanat auf Basis von IPDI vorzugsweise nach den oben beschriebenen bekannten Verfahren hergestellt wird. Das so erhaltene mindestens eine oligomere Polyisocyanat auf Basis von IPDI wird nach gängigen Verfahren aufgereinigt, so dass es im Wesentlichen monomerarm ist. Das mindestens eine oligomere Polyisocyanat auf Basis von IPDI liegt in diesem Fall üblicherweise bei Raumtemperatur als Feststoff vor. Es kann in monomerem IPDI aufgelöst werden, um die Polyisocyanatkomponente a-2) auf Basis von IPDI zu erhalten. Diese Vorgehensweise ist jedoch nicht bevorzugt, da sie aufwendiger ist als die zuvor beschriebene Vorgehensweise.

In einer bevorzugten Ausführungsform umfasst die Polyisocyanatkomponente a-2) auf Basis von IPDI, bezogen auf die Masse, eine größere Menge des monomeren IPDIs im Vergleich zur Menge des oligomeren Polyisocyanates auf Basis von IPDI. Die Polyisocyanatkomponente a-2) auf Basis von IPDI umfasst somit, in Bezug auf die gesamte Masse der Polyisocyanatkomponente a-2) auf Basis von IPDI, in dieser Ausführungsform monomeres IPDI im Überschuss zum oligomeren Polyisocyanat auf Basis von IPDI.

Auch eine solche Polyisocyanatkomponente a-2) auf Basis von IPDI kann bevorzugt durch die Herstellungsverfahren Herstellung 1 und 2 erhalten werden. Besonders bevorzugt wird sie durch Herstellung 1 erhalten.

Die Polyisocyanatkomponente a-2) auf Basis von IPDI umfasst vorzugsweise 10 bis 45 Gew,-%, besonders bevorzugt 20 bis 40 Gew,-% oligomeres Polyisocyanat auf Basis von IPDI und vorzugsweise 90 bis 55 Gew,-%, besonders bevorzugt 80 bis 60 Gew,-% des monomeren IPDIs bezogen auf die Gesamtmasse der beiden.

Die Polyisocyanatkomponente a-2) auf Basis von IPDI, in der vorzugsweise, bezogen auf die Masse, die Menge des monomeren IPDIs größer als die Menge des mindestens einen oligomeren Polyisocyanates auf Basis von IPDI ist, weist vorzugsweise einen Gehalt an Isocyanatgruppen von 27 bis 36 Gew,-% und besonders bevorzugt von 29 bis 33 Gew,-% bezogen auf die Polyisocyanatkomponente a-2) auf Basis von IPDI auf.

Die Polyisocyanatkomponente a-2) auf Basis von IPDI weist vorzugsweise eine Viskosität bei 23°C von 100 bis 3 000 mPa·s, besonders bevorzugt von 300 bis 2 800 mPa·s, ganz besonders bevorzugt von 500 bis 2 650 mPa·s auf, Des Weiteren weist sie vorzugsweise einen Gehalt an Isocyanatgruppen von 26 bis 36 Gew,-%, besonders bevorzugt von 27 bis 34 Gew,-%, ganz besonders bevorzugt von 28 bis 32 Gew,-% bezogen auf die Polyisocyanatkomponente a-2) auf Basis von IPDI auf.

Die Komponente A) umfassend 10 bis weniger als 50 Gew,-% mindestens eines oligomeren Polyisocyanates a-1) auf Basis von HDI und mehr als 50 bis 90 Gew,-% mindestens eine Polyisocyanatkomponente a-2) auf Basis von Isophorondiisocyanat, enthaltend monomeres Isophorondiisocyanat (IPDI) und mindestens ein oligomeres Polyisocyanat auf Basis von IPDI, kann vorzugsweise durch einfaches Vermischen der Komponenten a-1) und a-2) hergestellt werden. Das Vermischen kann vorzugsweise durch Rühren unterstützt werden. Es sollte vorzugsweise eine homogene Mischung erhalten werden. Die Homogenität der Mischung kann insbesondere auch durch Vorwärmen der Komponenten a-1) und a-2) vor ihrer Vermischung auf Temperaturen von vorzugsweise 30 bis 120°C verbessert werden. Vorzugsweise wird die Temperatur des Gemisches von a-1) und a-2) durch weitere Temperaturzuführung auf vorzugsweise 30 bis 100°C, besonders bevorzugt 40 bis 80°C gehalten. Es ist jedoch insbesondere ein Vorteil, dass, wenn die Polyisocyanatkomponente a-2) bezogen auf ihre Masse eine Menge an monomeren IPDI aufweist, welche größer ist als die Menge des oligomeren Polyioscyanates auf Basis von IPDI, das Vermischen der Komponenten a-1) und a-2) sowie insbesondere auch das Gießen bei Raumtemperatur stattfinden können. Dies kann insbesondere auf die Viskosität der Komponente a-2) bei Raumtemperatur zurückgeführt werden.

Die Komponente A) fällt somit vorzugsweise als eine klare, im Wesentlichen farblose Mischung an. Die Komponente A) weist bevorzugt bei 23 °C eine Viskosität von 100 bis 3 000 mPa·s, besonders bevorzugt von 150 bis 2 700 mPa·s, ganz besonders bevorzugt von 200 bis 2 300 mPa·s auf,

Der Gehalt an Isocyanatgruppen der Komponente A) liegt bevorzugt im Bereich von 24 bis 34 Gew,-%, besonders bevorzugt 25 bis 32 Gew,-%, ganz besonders bevorzugt 26 bis 30 Gew,-% bezogen auf das Gesamtgewicht der Komponente A).

In einer bevorzugten Ausführungsform umfasst die Komponente A) 10 bis weniger als 50 Gew,-% mindestens eines oligomeren Polyisocyanats a-1) auf Basis von HDI und mehr als 50 bis 90 Gew,-% mindestens eine Polyisocyanatkomponente a-2) auf Basis von Isophorondiisocyanat, enthaltend monomeres Isophorondiisocyanat (IPDI) und mindestens ein oligomeres Polyisocyanat auf Basis von IPDI, worin, bezogen auf die Masse, die Menge des monomeren IPDIs größer als die Menge des oligomeren Polyisocyanates auf Basis von IPDI ist. Wie bereits oben ausgeführt, weist diese Ausführungsform insbesondere den Vorteil auf, dass durch den hohen Anteil an monomeren IPDI in der Komponente a-2) sowie insgesamt auch in der Zusammensetzung die Verarbeitung der Komponente a-2) und auch der Zusammensetzung bei Raumtemperatur möglich ist. Dabei werden die resultierenden Eigenschaften der gehärteten Zusammensetzung bevorzugt jedoch im Wesentlichen nicht beeinflusst. Damit sind besonders bevorzugt sowohl die mechanischen als auch die optischen Eigenschaften der gehärteten Zusammensetzung dieser Ausführungsform im Wesentlichen gleich zu denen einer gehärteten Zusammensetzung, in der in der Komponente a-2) die Menge des monomeren IPDIs geringer ist als die Menge des oligomeren Polyisocyanates auf Basis von IPDI.

Die Komponente A) ist bevorzugt lösemittelfrei.

### Komponente B)

Die erfindungsgemäße Zusammensetzung enthält mindestens eine gegenüber Isocyanatgruppen reaktive Komponente, ausgewählt aus der Gruppe, bestehend aus Polyesterpolyol, Polyetherpolyol und Mischungen daraus.

Diese Komponente B) ist vorzugsweise auf Grund der im statistischen Mittel mindestens zwei OH-Gruppen pro Molekül des Polyesterpolyols, des Polyetherpolyols oder dessen Mischung befähigt, mit der Komponente A), welche Isocyanatgruppen enthält, zu reagieren.

Besonders bevorzugt weist die Komponente B) eine mittlere Funktionalität in Bezug auf OH-Gruppen von 2,3 bis 6,0 auf. Das Äquivalentverhältnis von Isocyanatgruppen der Komponente A) zu Hydroxylgruppen der Komponente B) beträgt bevorzugt von 0,5 : 1 bis 2,0: 1, besonders bevorzugt von 1;1,

Die Komponente B) ist bevorzugt lösemittelfrei.

In einer bevorzugten Ausführungsform ist die gegenüber Isocyanatgruppen reaktive Komponente frei von aromatischen Strukturen. Aromatische Strukturen sind insbesondere dafür verantwortlich, dass die resultierenden Kunststoffe nicht lichtecht und vergilbungsstabil sind. Des Weiteren haben Kunststoffe, welche aromatische Strukturen aufweisen, den Nachteil, dass ihre Brechungsindices größer 1,50 sind.

In einer bevorzugten Ausführungsform umfasst die Komponente B) entweder Polyesterpolyole oder Polyetherpolyole. Dies bedeutet, dass in dieser Ausführungsform keine Mischung der beiden Komponenten vorliegt. Dabei ist das Polyesterpolyol im Wesentlichen frei von Polyetherpolyol oder das Polyetherpolyol ist im Wesentlichen frei von Polyesterpolyol. Diese Ausführungsform ist vorteilhaft, da Polyesterpolyole und Polyetherpolyole teilweise schwer miteinander vermischbar sind. Dies kann negative Auswirkungen auf die Eigenschaften der ausgehärteten Zusammensetzung mit sich bringen.

### Polyesterpolyol

Polyesterpolyole im Sinne der Erfindung sind Verbindungen, welche mindestens zwei, bevorzugt mehr als zwei Estergruppen und mindestens zwei OH-Gruppen, bevorzugt mehr als zwei OH-Gruppen pro Molekül aufweisen.

Bevorzugte Polyesterpolyole sind solche, welche auf Basis von Dicarbonsäuren gebildet werden. Dabei handelt es sich bevorzugt um aliphatische Dicarbonsäuren, Solche Dicarbonsäuren weisen bevorzugt 4 bis 10 Kohlenstoffatome auf.

Polyesterpolyole der Komponente B) sind allgemein bekannt. Ihre Herstellung erfolgt in an sich bekannter Weise vorzugsweise nach Methoden wie sie beispielsweise in "Ullmanns Encyclopädie der Technischen Chemie", Verlag Chemie Weinheim, 4. Auflage (1980), Band 19, Seiten 61ff, oder von H. Wagner und H.F. Sarx in "Lackkunstharze", Carl Hanser Verlag, München (1971), Seiten 86 bis 152 ausführlich beschrieben sind. Gegebenenfalls können dabei katalytische Mengen üblicher Veresterungskatalysatoren, wie z. B. Säuren, Basen oder Übergangsmetallverbindungen, wie z.B. Titantetrabutylat, zum Einsatz gelangen. Die Veresterungsreaktion wird bevorzugt in einem Temperaturbereich von ca. 80 bis 260°C, vorzugsweise von 100 bis 230°C, so lange durchgeführt bis die angestrebten Werte für Hydroxyl- und Säurezahl erreicht sind.

Ausgangsverbindungen zur Herstellung der erfindungsgemäß einzusetzenden Polyesterpolyole der Komponente B) sind beliebige vorzugsweise aliphatische oder cycloaliphatische, gesättigte oder ungesättigte Dicarbonsäuren oder deren Anhydride mit 4 bis 10 Kohlenstoffatomen, vorzugsweise mit 4 bis 6 Kohlenstoffatomen, sowie mehrwertige aliphatische oder cycloaliphatische Alkohole, vorzugsweise Diole und Triole, mit 2 bis 18 Kohlenstoffatomen, vorzugsweise 2 bis 6 Kohlenstoffatomen.

Geeignete Dicarbonsäuren bzw. Anhydride können vorzugsweise ausgewählt werden aus der Gruppe, bestehend aus Bernsteinsäure, Bernsteinsäureanhydrid, Glutarsäure, Adipinsäure, Pimelinsäure, Korksäure, Azelainsäure, Sebacinsäure, Decandicarbonsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure und Tetrahydrophthalsäureanhydrid, die sowohl einzeln als auch in Form beliebiger Gemische untereinander verwendet werden können.

Geeignete mehrwertige Alkohole zur Herstellung der Polyesterpolyole können ausgewählt werden aus der Gruppe, bestehend aus 1,2-Ethandiol, 1,2- und 1,3-Propandiol, die isomeren Butandiole, Pentandiole, Hexandiole, Heptandiole und Octandiole, 2-Butyl-2-ethyl-1,3-propandiol, 1,10-Decandiol, 1,12-Dodecandiol, 1,2- und 1,4-Cyclohexandiol, 1,4-Cyclohexandimethanol, 4,4'-(1-Methylethyliden)-biscyclohexanol, 1,2,3-Propantriol (Glycerin), 1,1,1-Trimethylolethan, 1,2,6-Hexantriol, 1,1,1-Trimethylolpropan, 2,2-Bis(hydroxymethyl)-1,3-propandiol, niedermolekulare Polyetherdiole, wie z. B. Diethylenglykol und Dipropylenglykol, und beliebige Gemische solcher Alkohole.

Bevorzugte Polyesterpolyole sind solche auf Basis von Bernsteinsäure und/oder Adipinsäure sowie 1,3-Butandiol, 1,4-Butandiol, 2,2-Dimethyl-1,3-propandiol, 2,2,4-Trimethyl-1,5-pentandiol, Diethylenglykol, Glycerin und/oder 1,1,1-Trimethylolpropan als alkoholischen Aufbaukomponenten.

Ebenfalls geeignete Polyesterpolyole sind solche, wie sie sich in an sich bekannter Weise aus Lactonen und einfachen mehrwertigen Alkoholen als Startermolekülen unter Ringöffnung herstellen lassen.

Geeignete Lactone zur Herstellung dieser Esterpolyole sind beispielsweise □-Propiolacton, γ-Butyrolacton, δ-Valerolacton, ε-Caprolacton, 3,5,5- und 3,3,5-Tri¬methylcaprolacton oder beliebige Gemische solcher Lactone. Bevorzugte eingesetztes Lacton ist ε-Caprolocton. Als Startermoleküle dienen beispielsweise die oben beispielhaft genannten mehrwertigen Alkohole oder beliebige Gemische dieser Alkohole.

Die Herstellung solcher Lactonpolyesterpolyole durch ringöffnende Polymerisation erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 200°C.

Daneben kann auch bei der Herstellung der erfindungsgemäß einzusetzenden Polyesterpolyole auf Basis aliphatischer Dicarbonsäuren optional, beispielsweise zur Erniedrigung der Viskosität, ε-Caprolacton in untergeordneter Menge mitverwendet werden. Falls überhaupt, kommt ε-Caprolacton dabei in solchen Menge zum Einsatz, dass in den resultierenden Polyesterpolyolen maximal 20 Gew,-% an ε-Caprolacton in Form von Polycaprolactonstrukturen gebunden vorliegen.

Die mittlere Funktionalität des Polyesterpolyols in Bezug auf die OH-Gruppen beträgt bevorzugt von 2,0 bis 4,0, besonders bevorzugt von 2,2 bis 3,5, ganz besonders bevorzugt von 2,3 bis 3,3.

Dabei weist das Polyesterpolyol vorzugsweise eine OH-Zahl von 100 bis 850 mg KOH/g, vorzugsweise von 350 bis 800 mg KOH/g , besonders bevorzugt von 400 bis 750 mg KOH/g auf. Die OH-Zahl-Bestimmung erfolgt erfindungsgemäß nach DIN 53240 T.2.

Des Weiteren weist das Polyesterpolyol bevorzugt eine Säurezahl von maximal 5, besonders bevorzugt von maximal 3 auf. Die Säurezahl-Bestimmung erfolgt erfindungsgemäß nach DIN 3682.

Die in der erfindungsgemäßen Zusammensetzung vorliegenden Polyesterpolyole sind bei Verarbeitungstemperatur bevorzugt flüssig. Sie weisen vorzugsweise bei 25 °C Viskositäten von weniger als 6000 mPa·s, besonders bevorzugt von weniger als 4000 mPa·s und ganz besonders bevorzugt von weniger als 3000 mPa·s auf,

Die Umsetzung der Komponente A) mit der Komponente B), welche mindestens ein Polyesterpolyol umfasst, erfolgt vorzugsweise unter Einhaltung eines Äquivalentverhältnisses von Isocyanatgruppen zu gegenüber Isocyanaten reaktiven Gruppen von 0,5 : 1 bis 2,0 ; 1, besonders bevorzugt von 0,7 : 1 bis 1,3 : 1, ganz besonders bevorzugt von 0,9 : 1 bis 1,1 : 1,

### Polyetherpolyol

Polyetherpolyole im Sinne der Erfindung sind Verbindungen, welche mindestens zwei, bevorzugt mehr als zwei Ethergruppen und mindestens zwei OH-Gruppen, bevorzugt mehr als zwei OH-Gruppen aufweisen. Dabei bilden die mindestens zwei Ethergruppen die Hauptkette des Polyetherpolyols.

Polyetherpolyole der Komponente B) sind bekannt und beispielsweise nach den in der DE-A 2 622 951, Spalte 6, Zeile 65 - Spalte 7, Zeile 47, oder der EP-A 0 978 523 Seite 4, Zeile 45 bis Seite 5, Zeile 14 beschriebenen Verfahren, z. B. durch Alkoxylierung geeigneter Startermoleküle mit Alkylenoxiden, zugänglich.

Die Alkoxylierungsreaktion kann sowohl basisch als auch sauer katalysiert erfolgen. Geeignete basische Katalysatoren sind beispielsweise Alkalihydroxide, wie z.B. Natrium-oder Kaliumhydroxid, oder Alkalialkoholate, wie z.B. Natriummethylat. Als saure Katalysatoren eignen sich beispielsweise Lewis-Säuren, wie z. B. Antimonpentachlorid und Bortrifluorid-Etherat oder auch Doppelmetallcyanid(DMC)-Katalysatoren, wie z. B. Zinkhexacyanokobaltat, Diese Katalysatoren werden im Anschluss an die Synthese üblicherweise durch Neutralisation, Destillation und/oder Filtration entfernt.

Als Startermoleküle zur Herstellung der erfindungsgemäß eingesetzten Polyetherpolyole eignen sich beliebige Verbindungen des Molekulargewichtsbereiches 60 bis 200. Bevorzugt sind Ausgangsverbindungen, die frei von aromatischen Strukturen sind. Des Weiteren tragen diese Ausgangsverbindungen bevorzugt 3 bis 6, besonders bevorzugt bis zu 4 reaktive Wasserstoffatome, Hierbei handelt es sich vorzugsweise um einfache aliphatische Alkohole mit 3 bis 6 Kohlenstoffatomen, welche beispielsweise ausgewählt werden können aus der Gruppe, bestehend aus 1,2,3-Propantriol, 1,1,1-Trimethylolethan, 1,2,6-Hexantriol, 1,1,1-Trimethylolpropan, 2,2-Bis(hydroxymethyl)-1,3-propandiol, 1,2,4- und 1,3,5-Trihydroxy-cyclohexan und Sorbit, um aliphatische Diamine, welche beispielsweise ausgewählt werden können aus der Gruppe, bestehend aus Ethylendiamin, 1,3-Propylendiamin und die isomeren Butylendiamine, Pentylendiamine und Hexylendiamine, die gegebenenfalls durch Alkylreste mit 1 bis 4 Kohlenstoffatomen an einem Stickstoffatom monosubstituiert sein können, oder auch um aliphatische Polyamine, welche beispielsweise ausgewählt werden können aus der Gruppe, bestehend aus Diethylentriamin und Triethylentetramin. Eine weitere bevorzugte Klasse geeigneter Startermoleküle sind darüber hinaus Alkanolamine, wie z.B. Ethanolamin, Dialkanolamine, wie z.B. Diethanolamin, und Trialkanolamine, wie z.B. Triethanolamin,

Diese Startermoleküle können sowohl alleine als auch in Form beliebiger Gemische untereinander eingesetzt werden.

Für die Alkoxylierungsreaktion geeignete Alkylenoxide sind insbesondere Ethylenoxid und Propylenoxid. Sie können sowohl alleine als auch in beliebiger Reihenfolge nacheinander oder in Form beliebiger Mischungen untereinander mit den genannten Startermolekülen umgesetzt werden.

Besonders bevorzugte Polyetherpolyole sind Anlagerungsprodukte von Ethylenoxid und/oder Propylenoxid an 1,2,3-Propantriol, 1,1,1-Trimethylolpropan, Ethylendiamin und/oder Pentaerythrit.

Ganz besonders bevorzugte Polyetherpolyole sind solche, bei deren Herstellung als Alkylenoxid ausschließlich Propylenoxid zum Einsatz kommt.

Daneben stellen auch Polytetramethylenetherglykole, wie sie beispielsweise gemäß Angew. Chem. 72, 927 (1960) durch Polymerisation von Tetrahydrofuran erhältlich sind, geeignete Polyetherpolyole dar.

Bei der Herstellung der erfindungsgemäßen Zusammensetzung können neben den Polyetherpolyolen gegebenenfalls in untergeordneten Mengen auch einfache niedermolekulare mindestens trifunktionelle Alkohole mitverwendet werden. Diese weisen vorzugsweise Molekulargewichte von 92 bis 182 auf. Diese kommen, falls überhaupt, in Mengen von maximal bis zu 10 Gew,-%, bevorzugt bis zu 5 Gew,-%, bezogen auf die Menge an Polyetherpolyol zum Einsatz. In einer bevorzugten Ausführungsform ist das Polyetherpolyol frei von niedermolekularen mindestens trifunktionellen Alkoholen.

Das Polyetherpolyol weist bevorzugt eine mittlere Funktionalität in Bezug auf die OH-Gruppe von 3,0 bis 6,0, besonders bevorzugt von 3,0 bis 4,0, ganz besonders bevorzugt von 3,0 bis 3,5 auf. Dabei weist es vorzugsweise eine OH-Zahl von 80 bis 1000 mg KOH/g, besonders bevorzugt von 110 bis 800 mg KOH/g, ganz besonders bevorzugt von 150 bis 600 mg KOH/g auf. Die OH-Zahl-Bestimmung erfolgt erfindungsgemäß nach DIN 53240 T.2.

Das Polyetherpolyol weist bevorzugt eine Viskosität bei 23 °C von 1 000 bis 6 000 mPa·s, besonders bevorzugt von 1 500 bis 5 800 mPa·s, ganz besonders bevorzugt von 1 900 bis 5 500 mPa·s auf,

Die Umsetzung der Komponente A) mit der Komponente B), welche mindestens ein Polyetherpolyol umfasst, erfolgt vorzugsweise unter Einhaltung eines Äquivalentverhältnisses von Isocyanatgruppen zu gegenüber Isocyanaten reaktiven Gruppen von 0,5 : 1 bis 2,0 ; 1, besonders bevorzugt von 0,7 : 1 bis 1,3 : 1, ganz besonders bevorzugt von 0,8 : 1 bis 1,2 : 1.

### Komponente C)

Neben den genannten Komponenten A) und B) können gegebenenfalls ein oder mehrere Hilfs- und/oder Zusatzmittel C) verwendet werden. Diese werden vorzugsweise ausgewählt aus der Gruppe, bestehend aus Katalysatoren, UV-Stabilisatoren, Antioxidantien, Formtrennmittel und beliebige Gemische daraus.

Als Katalysatoren können übliche, aus der Polyurethanchemie bekannte Katalysatoren zum Einsatz kommen. Bevorzugte Katalysatoren können ausgewählt werden aus der Gruppe, bestehend aus tertiären Aminen, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methylmorpholin, N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-β-phenylethylomin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, N,N',N"-Tris-(dimethylaminopropyl)-S-hexahydrotriazin, Bis(dimethylaminoethyl)ether; Metallsalzen, wie z. B. anorganische und/oder organische Verbindungen des Eisens, Bleis, Bismuts, Zinks, und/oder Zinns in üblichen Oxidationsstufen des Metalls, beispielsweise Eisen(II)-chlorid, Eisen(III)-chlorid, Bismut(III)-, Bismut(III)-2-ethylhexanoat, Bismut(III)-octoat, Bismut(III)-neodecanoct, Zinkchlorid, Zink-2-ethylcaproat, Zinn(II)-octoat, Zinn(II)-ethylcaproot, Zinn(II)-palmitat, Dibutylzinn(IV)-dilaurat (DBTL), Dibutylzinn(IV)-dichlorid, Bleioctoat; Amidinen, wie z. B. 2,3-Dimethyl-3,4,5,6-tetrahydropyrimidin; Tetraalkylammoniumhydroxiden, wie z. B. Tetramethylammoniumhydroxid; Alkalihydroxiden, wie z. B. Natriumhydroxid; Alkalialkoholaten, wie z. B. Natriummethylat, Kaliumisopropylat; und Alkalisalzen von langkettigen Fettsäuren mit 10 bis 20 C-Atomen und gegebenenfalls seitenständigen OH-Gruppen.

Besonders bevorzugte einzusetzende Katalysatoren C) sind tertiäre Amine, Zinn-, Zink und Bismutverbindungen der genannten Art.

Die genannten Katalysatoren können bei der Herstellung der erfindungsgemäßen transparenten Materialien einzeln oder in Form beliebiger Mischungen untereinander eingesetzt werden. Sie kommen dabei, falls überhaupt, vorzugsweise in Mengen von 0,01 bis 5,0 Gew, %, besonders bevorzugt 0,1 bis 2 Gew,-%, berechnet als Gesamtmenge an eingesetzten Katalysatoren bezogen auf die Gesamtmenge der verwendeten Komponenten A) und B) der erfindungsgemäßen Zusammensetzung, zum Einsatz.

Die aus der erfindungsgemäßen Zusammensetzung erhaltenen transparenten Materialien zeichnen sich bereits als solche, d. h. ohne Zusatz entsprechender Stabilisatoren, durch eine sehr gute Lichtbeständigkeit aus. Dennoch können bei ihrer Herstellung gegebenenfalls UV-Schutzmittel (Lichtstabilisatoren) oder Antioxidantien der bekannten Art als weitere Hilfs- und Zusatzmittel C) mitverwendet werden.

Geeignete UV-Stabilisatoren können vorzugsweise ausgewählt werden aus der Gruppe, bestehend aus Piperidinderivaten, wie z. B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z. B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z. B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-[5-Chlor-2H-benzotriazol-2-yl]-6-[1,1 -dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-l-phenylethyl)-4-(1,1,3,3-tetramethylbutyl)phenol, Isooctyl-3-(3-(2H-benzotriazol-2-yl)-5-(1,1 -dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis[1-methyl-1-phenylethyl)phenol, 2-[5-Chlor-2H-benzotriazol-2-yl]-4,6-bis[1,1-dimethylethyl)phenol; Oxalaniliden, wie z. B. 2-Ethyl-2'-ethoxy- oder 4-Methyl-4'-methoxyoxalanilid; Salicylsäureestern, wie z. B. Salicylsäurephenylester, Salicylsäure-4-tert-butylphenylester, Salicylsäure-4-tert-octylphenylester; Zimtsäureesterderivaten, wie z. B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z. B. 4-Methoxybenzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren für die erfindungsgemäß herstellbaren transparenten Materialien sind solche, die Strahlung einer Wellenlänge < 400 nm vollständig absorbieren, so dass bei einer Verwendung der erfindungsgemäßen Zusammensetzung als Brillengläser ein vollständiger Schutz des Auges vor UV-Strahlung gegeben ist. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-[5-Chlor-2H-benzotriazol-2-yl]-4,6-bis[1,1-dimethylethyl)phenol.

Falls überhaupt, werden die beispielhaft genannten UV-Stabilisatoren der erfindungsgemäßen Zusammensetzung vorzugsweise in Mengen von 0,001 bis 3,0 Gew. %, besonders bevorzugt 0,01 bis 2 Gew.-%, berechnet als Gesamtmenge an eingesetzten UV-Stabilisatoren bezogen auf die Gesamtmenge der verwendeten Komponenten A) und B) der erfindungsgemäßen Zusammensetzung, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (lonol), Pentaerythrit-tetrakis(3-(3,5-di-tert-butyl-4-hydroxyphenyl) propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien werden vorzugsweise in Mengen von 0,01 bis 3,0 Gew. %, besonders bevorzugt 0,02 bis 2 Gew.-%, berechnet als Gesamtmenge an eingesetzten Antioxidantien bezogen auf die Gesamtmenge der verwendeten Komponenten A) und B) der erfindungsgemäßen Zusammensetzung, mitverwendet.

Die erfindungsgemäße Zusammensetzung kann gegebenenfalls als weitere Hilfs- und Zusatzstoffe C) auch interne Formtrennmittel enthalten.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z. B. Trimethylethylammoniumchlorid, Trimethylstearylammoniumchlorid, Dimethylethylcetylammoniumchlorid, Triethyldodecylammoniumchlorid, Trioctylmethylammoniumchlorid und Diethylcyclohexyldodecylammoniumchlorid, saure Mono- und Dialkylphosphate mit 2 bis 18 Kohlenstoffatomen im Alkylrest, wie z. B. Ethylphosphat, Diethylphosphat, Isopropylphosphat, Diisopropylphosphat, Butylphosphat, Dibutylphosphat, Octylphosphat, Dioctylphosphat, Isodecylphosphat, Diisodecylphosphat, Dodecylphosphat, Didoceylphosphat, Tridecanolephosphat, Bis(tridecanol)-phosphat, Stearylphospat, Distearylphosphat und beliebige Gemische solcher Formtrennmittel.

Besonders bevorzugte Formtrennmittel sind die genannten sauren Mono- und Dialkylphosphate, ganz besonders bevorzugt solche mit 8 bis 12 Kohlenstoffatomen im Alkylrest,

Interne Formtrennmittel werden in der erfindungsgemäßen Zusammensetzung, falls überhaupt, vorzugsweise in Mengen von 0,01 bis 3,0 Gew. %, besonders bevorzugt 0,02 bis 2 Gew.-%, berechnet als Gesamtmenge an eingesetzten internen Formtrennmittel bezogen auf die Gesamtmenge der verwendeten Komponenten A) und B) der erfindungsgemäßen Zusammensetzung, eingesetzt.

Zur Kompensation eines gegebenenfalls auftretenden Gelbstichs, der in den erfindungsgemäß erhaltenen Polyurethanen beispielsweise bei Mitverwendung der oben beschriebenen UV-Stabilisatoren auftreten kann, können den erfindungsgemäßen Zusammensetzungen vorzugsweise als weitere Hilfs- und Zusatzmittel C) optionale, an sich bekannte Bläuungsmittel zugesetzt werden. Diese kommen vorzugsweise nur in äußerst niedrigen Konzentrationen, beispielsweise in Mengen von 5 ppb bis 50 ppm zum Einsatz, um eine Abnahme der Transmission oder eine Vergrauung des Materials zu verhindern, Die Zugabe erfolgt bevorzugt in Form eines Masterbatches, d. h. als vorformulierte verdünnte Lösung in einem der sonstigen Rezepturbestandteile, beispielsweise der Komponente A) und/oder der Komponente B). Geeignete Bläuungsmittel für die erfindungsgemäßen Zusammensetzungen können vorzugsweise ausgewählt werden aus der Gruppe, bestehend aus kommerziell erhältlichen Anthrachinonfarbstoffen, wie z. B. Exalite Blue 78-13 der Firma Exciton, Inc., Dayton, Ohio, USA oder Macrolex Violet B, Macrolex Blue RR und Macrolex Violet 3R der Fa. Lanxess AG, Leverkusen, Deutschland und beliebige Mischungen davon.

Alle vorstehend genannten, gegebenenfalls mitzuverwendende Hilfs- und/oder Zusatzmittel C) können sowohl der Komponente A) als auch dem Komponente B) zugemischt werden. Bevorzugt werden Komponenten C) ausgewählt aus der Gruppe, bestehend aus internen Trennmitteln, Katalysatoren und Mischungen daraus, der Komponente A) zugemischt. Komponente C), welche ausgewählt wird aus der Gruppe, bestehend aus UV-Stabilisatoren, Antioxidantien, Farbstoffen und Mischungen daraus, werden bevorzugt der Komponente B) zugesetzt.

In einer bevorzugten Ausführungsform wird eine Zusammensetzung bereitgestellt, worin mindestens eines, bevorzugter alle der folgenden Merkmale erfüllt sind
- die Komponente A) bestehend aus a-1) und a-2) bei 23°C eine Viskosität von 100 bis 3.000 mPa·s und einen Gehalt an Isocyanatgruppen von 25 bis 34 Gew.-% aufweist,
- die Komponente a-1) einen NCO-Gehalt von 20 bis 24 Gew.-% aufweist,
- die Komponente a-2) eine Lösung eines oligomeren Polyisocyanates auf Basis von Isophorondiisocyanat in einer überschüssigen Gewichtsmenge (> 50 Gew.-% bezogen auf das Gesamtgewicht von a-2)) an monomerem Isophorondiisocyanat mit einen NCO-Gehalt der Komponente a-2) von 27 bis 36 Gew.-% ist,
- die Komponente B) entweder eines, bevorzugt alle Merkmale
   - ein Polyesterpolyol auf Basis aliphatischer Dicarbonsäuren mit 4 bis 10 Kohlenstoffatomen und/oder ε-Caprolacton ist,
   - das Polyesterpolyol frei von aromatischen Strukturen ist,
   - das Polyesterpolyol eine mittlere Funktionalität von 2,3 bis 4,0 aufweist,
   - das Polyesterpolyol eine OH-Zahl von 100 bis 850 mg KOH/g aufweist,
   oder eines, bevorzugt alle Merkmale
   - ein Polyetherpolyol ist,
   - das Polyetherpolyol frei von aromatischen Strukturen ist,
   - das Polyetherpolyol eine mittlere Funktionalität von 3 bis 6 aufweist,
   - das Polyetherpolyol eine OH-Zahl von 80 bis 1000 mg KOH/g aufweist,
      und
   - optional ein oder mehrere Hilfs- und/oder Zusatzmittel C), bevorzugt mindestens einen Katalysator, mindestens einen UV-Stabilisator, mindestens ein Antioxidant und mindestens ein Formtrennmittel,
   - das Äquivalentverhältnis von Isocyanatgruppen in A) zu Hydroxylgruppen in B) von 0,5 : 1 bis 2,0 : 1 ist.

In einer weiteren Ausführungsform der vorliegenden Erfindung besteht die erfindungsgemäße Zusammensetzung aus den Komponenten A), B) und C).

In einer weiteren Ausführungsform betrifft die vorliegende Erfindung auch ein Kit-of-parts umfassend die Komponenten A) und B), wie in den Ansprüchen 3 bis 6 definiert, in räumlich getrennter Anordnung. Dabei kann es sich um ein Zwei-Komponenten-System handeln. In diesem Fall kann die gegebenenfalls vorhandene Komponente C), wie oben definiert, einer oder beiden Komponenten A) und B) zugesetzt werden. Dabei werden bevorzugt Komponenten C) ausgewählt aus der Gruppe, bestehend aus internen Trennmitteln, Katalysatoren und Mischungen daraus, der Komponente A) zugemischt. Komponente C), welche ausgewählt wird aus der Gruppe, bestehend aus UV-Stabilisatoren, Antioxidantien, Farbstoffen und Mischungen daraus, werden bevorzugt der Komponente B) zugesetzt. Ebenso kann die gegebenenfalls vorhandene Komponente C) auch teilweise oder ganz in einer dritten, räumlich getrennt vorliegenden Komponente des Kit-of-parts vorliegen. Dabei können die Hilfs- und/oder Zusatzstoffe so aufgeteilt werden, dass einige den Komponenten A) und/oder B) beigemengt werden und andere als dritte Komponente vorliegen.

### Erfindungsgemäße Polyurethane

Die erfindungsgemäße Zusammensetzung umfassend die beschriebenen Komponenten A) und B), sowie gegebenenfalls die Komponente C), wird in Verhältnissen, wie oben vorzugsweise über das Äquivalentverhältnis der Isocyanatgruppen zu gegenüber Isocyanatgruppen reaktiven Gruppen oder das Gew.-% definiert, vorzugsweise mit Hilfe geeigneter Mischaggregate gemischt. Danach kann die erfindungsgemäße Masse nach beliebigen Methoden, vorzugsweise in offenen oder geschlossenen Formen, vorzugsweise durch einfaches Vergießen von Hand, oder mit Hilfe geeigneter Maschinen, wie z. B. den in der Polyurethantechnologie üblichen Niederdruck- oder Hochdruckmaschinen oder nach dem RIM-Verfahren ausgehärtet werden. Dabei werden vorzugsweise Temperaturen von bis zu 160 °C, besonders bevorzugt von 10 bis 140 °C, ganz besonders bevorzugt von 20 bis 130 °C verwendet. Gegebenenfalls kann die Aushärtung auch unter einem erhöhten Druck, vorzugsweise von bis zu 300 bar, besonders bevorzugt von bis zu 100 bar, ganz besonders bevorzugt bis zu 40 bar stattfinden.

Die erfindungsgemäße Zusammensetzung kann zur Herstellung der erfindungsgemäßen Polyurethane verwendet werden. Diese Polyurethane bilden sich, indem die Isocyanatgruppen der Komponente A) mit den OH-Gruppen der Komponente B) reagieren. Dabei entstehen im Wesentlichen Urethangruppen. Es ist aber auch möglich, dass durch Nebenreaktionen andere funktionelle Gruppen neben diesen Urethangruppen im erfindungsgemäßen Polyurethan vorliegen. Dies ist jedoch weniger bevorzugt.

Die erfindungsgemäße Zusammensetzung kann zur Herstellung von transparenten Materialien verwendet werden, die aus dem erfindungsgemäßen Polyurethan bestehen. Somit wird insbesondere das hergestellte Polyurethan zur Herstellung transparenter Materialien verwendet.

Ebenso kann die erfindungsgemäße Zusammensetzung zur Herstellung transparenter Formkörper verwendet werden. Dabei wird der Formkörper insbesondere durch die Verwendung des hergestellten Polyurethans gebildet. Ebenso kann das hergestellte transparente Material zur Herstellung transparenter Formkörper verwendet werden.

Formkörper im Sinne dieser Erfindung sind insbesondere Formteile, wie sie in DIN 7708 definiert sind, also gestaltete Kunststofferzeugnisse, die aus Formmassen oder Halbzeugen hergestellt worden sind. Dabei sind Formmassen flüssige, pastöse oder feste Stoffe in verarbeitungsfertigem Zustand, die spanlos zu Halbzeugen oder Formteilen geformt werden können. Davon zu unterscheiden ist insbesondere eine Beschichtung, wie sie in EN ISO 4618:2006 definiert ist. Demnach ist eine Beschichtung eine durchgehende Schicht, die durch ein- oder mehrmaliges Auftragen von Beschichtungsstoff auf ein Substrat entsteht. Eine Beschichtung zeichnet sich somit insbesondere durch die Anwesenheit eines mit ihr in Beziehung stehenden Substrates. Insbesondere sind Beschichtungen in der Regel wesentlich dünner als Formkörper. Besonders bevorzugte Formkörper dieser Erfindung sind dreidimensionale einteilige Formkörper, deren kleinste Dimension (Dicke) mindestens 1 mm, besonders bevorzugt mindestens 2 mm, ganz besonders bevorzugt mindestens 3 mm ist. Bevorzugt weisen diese Formkörper eine derartige Dimension auf, dass ihre Geometrie eine Kugel mit einem Durchmesser von mindestens 1 mm, besonders bevorzugt mindestens 2 mm, ganz besonders bevorzugt mindestens 3 mm aufnehmen kann.

Die erfindungsgemäßen Formkörper eignen sich für eine Vielzahl unterschiedlicher Anwendungen transparenter Materialien, insbesondere als Glasersatz zur Herstellung von Scheiben, wie z. B. Sonnendächern, Front-, Heck- oder Seitenscheiben im Fahrzeug-oder Flugzeugbau, als Sicherheitsglas oder zum transparenten Verguss optischer, elektronischer oder optoelektronischer Bauteile, wie z. B. von Solarmodulen, Leuchtdioden oder von Linsen oder Kollimatoren, wie sie beispielsweise als Vorsatzoptik in LED-Leuchten oder Automobilscheinwerfern zum Einsatz kommen.

Ebenso kann der erfindungsgemäße Formköper eine optische Linse sein. Eine optische Linse ist insbesondere ein optisch wirksames Bauelement mit zwei lichtbrechenden Flächen. Insbesondere wird unter einer optischen Linse ein lichtdurchlässiger Formkörper verstanden, welcher durch Lichtbrechung die Abbildung von Gegenständen unter Verkleinerung oder Vergrößerung gestatte. Solche Linsen können insbesondere Anwendung finden in Mikroskopen, Fernrohren, Objektiven, Scheinwerfern, Projektoren, Lupen und Brillengläsern. In optischen Geräten sind solche Linsen meist zu Linsensystemen kombiniert.

Besonders bevorzugt wird das erfindungsgemäße Polyurethan verwendet, um einen transparenten Formkörper herzustellen, der eine optische Linse ist. Ganz besonders bevorzugt wird das erfindungsgemäße Polyurethan verwendet, um eine optische Linse herzustellen, welche ein Brillenglas ist.

Die Herstellung optischer Linsen, insbesondere Brillengläser, erfolgt in der Regel nach den in der Brillenglasindustrie üblichen Gießverfahren. Dabei werden bevorzugt aus zwei gläsernen Formschalen und einem polymeren Dichtungsring bestehenden Gießformen verwendet, in denen die erfindungsgemäße Zusammensetzung ausgehärtet wird. Bevorzugt erfolgt die Aushärtung drucklos. Besonders bevorzugt wird dabei eine streng kontrollierte Temperaturführung verwendet. Eine solche Temperaturführung kann vorzugsweise im Bereich von 10 bis 150°C vorzugsweise über einen Zeitraum von bis zu 60 h, besonders bevorzugt bis zu 48 h erfolgen, In einer bevorzugten Ausführungsform erfolgt die Aushärtung lösemittelfrei.

In einem Aspekt dieser Erfindung wird ein Polyurethan bereitgestellt, welches erhalten wird durch die Härtung der erfindungsgemäßen Zusammensetzung.

In einem anderen Aspekt dieser Erfindung wird eine optische Linse bereitgestellt, welche unter Verwendung der erfindungsgemäßen Zusammensetzung erhalten wird.

In einem weiteren Aspekt dieser Erfindung wird ein Brillenglas bereitgestellt, welches unter Verwendung der erfindungsgemäßen Zusammensetzung erhalten wird.

Ebenso wird ein Verfahren zur Herstellung transparenter Materialien durch Härtung der erfindungsgemäßen Zusammensetzung bereitgestellt. Dabei können die transparenten Materialien insbesondere transparente Formkörper sein. Diese Formkörper können vorzugsweise optische Linsen, insbesondere Brillengläser darstellen.

Um Blasenfreiheit und höchste Transparenz der erfindungsgemäßen transparenten Materialien zu gewährleisten, werden dabei die beiden Komponenten A) und B), üblicherweise nach Zusatz der gegebenenfalls mitzuverwendenden Hilfs- und Zusatzmittel C), vor oder nach dem Vermischen entlüftet, Dies kann beispielsweise für 10 min bis 6 h bei Temperaturen bis zu 80°C unter vermindertem Druck, beispielsweise bei 5 bis 50 mbar, erfolgen. Anschließend wird die Zusammensetzung gegebenenfalls wieder auf Temperaturen < 50°C, vorzugsweise < 30 °C abgekühlt und vorzugsweise gemischt über Feinfilter einer bevorzugten mittleren Porenweite von 0,1 bis 10 *µ*m in die Glasformen eingefüllt. Zur kontrollierten Aushärtung der Zusammensetzung ist es bevorzugt, die befüllten und verschlossenen Glasformen gegebenenfalls zunächst abzukühlen. Dabei kann die Temperatur bevorzugt < 20°C betragen. Anschließend wird über mehrere Stunden linear oder stufenweise bis auf eine Temperatur von vorzugsweise > 100°C, beispielsweise bis auf 130°C aufgeheizt.

Nach vollständiger Aushärtung und Abkühlung auf Raumtemperatur werden die so erhaltenen Rohlinge aus der Gießform entnommen. Zum Abbau von Materialspannungen werden sie üblicherweise bei Temperaturen von vorzugsweise > 100°C, beispielsweise bei 130°C, für mehrere Stunden, beispielsweise bis zu 10h, nachgetempert, Der Verlauf der Aushärtung kann beispielsweise durch IRspektroskopischen Bestimmung der noch vorhandenen Isocyanatgruppen erfolgen.

Auf diese Weise werden aus den erfindungsgemäßen Zusammensetzungen hochtransparente Materialien, insbesondere Brillenglasrohlinge erhalten. Solche Brillenglasrohlinge können nach den in der Brillenglasindustrie üblichen Verfahren, wie z. B. Schleifen, Polieren, Färben, Aufbringen von Antireflexbeschichtungen, Hartlackschichten und/oder hydrophoben Beschichtungen zu fertigen Brillengläsern weiterverarbeitet werden.

Ein solches Verfahren ermöglicht die Herstellung von vergilbungsstabilen Brillengläsern, die, wie entsprechende aus PADC, einen Brechungsindex von 1,50 und eine sehr geringe optische Dispersion aufweisen, gleichzeitig aufgrund einer niedrigeren Dichte leichter sind und über erheblich verbesserte mechanische und thermische Beständigkeiten verfügen. Aufgrund ihrer hohen Glasübergangstemperaturen im Bereich von 100°C und der hohen Wärmeformbeständigkeiten von > 80°C eignen sie sich insbesondere auch zur Herstellung randloser Brillen. Im Gegensatz zu PADC lassen sich die neuen Polyurethangläser mit Hilfe geeigneter UV-Stabilisatoren auch so ausrüsten, dass die für das menschliche Auge schädlichen UV-Strahlen im Wellenlängenbereich < 400 nm vollständig gefiltert werden.

### Beispiele

Alle Prozentangaben beziehen sich, soweit nichts Anderslautendes vermerkt, auf das Gewicht.

Die Bestimmung der NCO-Gehalte erfolgt erfindungsgemäß titrimetrisch nach DIN EN ISO 11909,

NCO-Funktionalitäten wurden aus dem Gelpermeationschromatogramm (GPC) berechnet.

OH-Zahlen wurden erfindungsgemäß titrimetrisch nach DIN 53240-2: 2007-11, SäureZahlen wurden erfindungsgemäß nach DIN 3682 bestimmt.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219 bei den jeweils angegebenen Temperaturen.

Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 10 °C/min bestimmt.

Die Bestimmung der Wärmeformbeständigkeit HDT erfolgte nach DIN EN ISO 75-2, Verfahren B, unter Verwendung einer Biegespannung von 0,45 MPa.

Shore-Härten wurden nach DIN 53505 mit Hilfe eines Shore-Härteprüfgerätes Zwick 3100 (Fa. Zwick, DE) gemessen.

Die Messung der Brechungsindices und Abbe-Zahlen erfolgte an einem Abbe-Refraktometer Modell B der Fa. Zeiss.

Transmission-Messungen nach ASTM D 1003 wurden mit einem Haze-Gard Plus der Fa. Byk durchgeführt. Die wellenlängenabhängige Transmission wurde mit Hilfe eines Zwei-Strahl-Spektralphotometers vom Typ Lambda 900 mit Integrationskugel (150 mm) der Fa. Perkin- Elmer, USA (0°/diffus, Referenz: Luft T=100%) bestimmt.

### Komponente A)

### Polyisocyanat a1-I)

Die Herstellung eines Isocyanuratgruppen enthaltendes HDI-Polyisocyanates erfolgt in Anlehnung an Beispiel 11 der EP-A 330 966, mit der Änderung, dass als Katalysatorlösemittel 2-Ethylhexanol statt 2-Ethyl-1,3-hexandiol eingesetzt wurde.

| | |
|---|---|
| NCO-Gehalt: | 22,9 % |
| NCO-Funktionalität: | 3,2 |
| Monomeres HDI: | 0,1 % |
| Viskosität (23°C): | 1 200 mPa·s |

### Polyisocyanat a1-II)

Die Herstellung eines Isocyanurat- und Iminoxadiazindiongruppen enthaltendes HDI-Polyisocyanates erfolgt in Anlehnung an Beispiel 4 der EP-A 0 962 455, durch Trimeriserung von HDI unter Verwendung einer 50 %-igen Lösung von Tetrabutylphosphoniumhydrogendifluorid in Isopropanol/Methanol (2:1) als Katalysator. Die Reaktion wird bei einem NCO-Gehalt der Rohmischung von 43 % durch Zugabe von Dibutylphosphat gestoppt. Anschließend erfolgt eine Abtrennung des nicht umgesetzten HDIs durch Dünnschichtdestillation bei einer Temperatur von 130°C und einem Druck von 0,2 mbar.

| | |
|---|---|
| NCO-Gehalt: | 23,4 % |
| NCO-Funktionalität: | 3,2 |
| Monomeres HDI: | 0,2 % |
| Viskosität (23°C): | 700 mPa·s |

### Polyisocyanat a2-I)

Isophorondiisocyanat (IPDI) wurde entsprechend Beispiel 2 der EP-A-0 003 765 bis zu einem NCO-Gehalt von 30,1 % trimerisiert. Der Katalysator wurde durch Zugabe einer äquimolaren Menge an Dibutylphosphat, bezogen auf die eingesetzte Katalysatormenge, und 30 minütiges Nachrühren bei 80°C deaktiviert. Auf die Abtrennung des nicht umgesetzten überschüssigen IPDI durch Dünnschichtdestillation wurde verzichtet. Es lag eine Lösung eines IPDI-Isocyanuratpolyisocyanats (35,5 Gew.-%) in monomerem IPDI (64,5 Gew.-%) vor.

| | |
|---|---|
| NCO-Gehalt: | 30,5 % |
| Monomeres IPDI: | 64,5 % |
| Viskosität (23°C): | 540 mPa·s |

### Polyisocyanat a2 - II)

Zu einem Gemisch aus 1554 g (7 mol) IPDI und 0,5 g (0,002 mol) Dibutylphosphat wurden unter Stickstoff und Rühren bei einer Temperatur von 80°C über einen Zeitraum von 5 Stunden 18 g (1,0 mol) Wasser kontinuierlich zudosiert. Kurze Zeit nach Beginn der Wasserzugabe setzte eine stetige CO₂-Entwicklung ein, die nach einer Nachrührzeit von 3 Stunden bei 90°C beendet war. Es lag eine farblose Lösung eines IPDI-Biuretpolyisocyanates (38,4 Gew.-%) in überschüssigem monomerem Diisocyanat (61,6 Gew.-%) vor.

| | |
|---|---|
| NCO-Gehalt: | 30,0 % |
| Monomeres IPDI: | 61,6 % |
| Viskosität (23°C): | 2600 mPas |

### Polyisocyanat a2 - III)

Aus dem vorstehend beschriebenen Polyisocyanat a2-I) wurde das monomere IPDI durch Dünnschichtdestillation bei einer Temperatur von 170 °C und einem Druck von 0,1 mbar abgetrennt. Man erhielt ein festes IPDI-Isocyanuratpolyisocyanat mit folgenden Kenndaten:

| | |
|---|---|
| NCO-Gehalt: | 17,0 % |
| Monomeres IPDI: | 0,3 % |
| Tg: | 65°C |

### Mischungen der Komponenten a-1) und a-2)

Die HDI-Polyisocyanate vom Typ a-1) wurden gemeinsam mit den Lösungen a-2) (oligomeres IPDI gemischt mit monomerem IPDI) in einem Reaktionsgefäß bei Raumtemperatur (beziehungsweise im Falle des Polyisocyanates A-VII bei 60 °C) unter N₂-Atmosphäre gerührt, bis jeweils eine klare Lösung vorlag.

Die nachfolgende Tabelle 1 zeigt Zusammensetzungen (Gew.-Teile) und Kenndaten der so hergestellten Polyisocyanate.

**Tabelle 1: Zusammensetzungen der Komponente A)**

| **Polyisocyanat** | **A-I** | **A-II** | **A-III** | **A-IV** | **A-V** | **A-VI** | **A-VII** | **AV-III (Vgl.)** |
|---|---|---|---|---|---|---|---|---|
| Polyisocyanat a1 - I) | 20 | 30 | 40 | 45 | - | 20 | 20 | 55 |
| Polyisocyanat a1 - II) | - | - | - | - | 30 | - | - | - |
| Polyisocyanat a2 - I) | 80 | 70 | 60 | 55 | 70 | - | 46 | 45 |
| Polyisocyanat a2 - II) | - | - | - | - | - | 80 | - | - |
| Polyisocyanat a2- III) | - | - | - | - | - | - | 34 | - |
| NCO-Gehalt [%] | 29,0 | 28,2 | 27,5 | 27,1 | 28,4 | 28,6 | 24,4 | 26,3 |
| Viskosität (23 °C) [mPa·s] | 660 | 720 | 800 | 825 | 550 | 2200 | 41100 | 950 |
| Viskosität (60 °C) [mPa·s] | n. b. | n. b. | n. b. | n. b. | n. b. | n. b. | 960 | n. b. |

### Komponente B) - Polyesterpolyole

### Polyesterpolyol B1)

Aus 7,4 Gew.-Teilen Neopentylglykol, 12,4 Gew.-Teilen 1,3-Butandiol, 18,2 Gew.-Teilen 2,2,4-Trimethyl-1,3-pentandiol, 16,2 Gew.-Teilen 2-Butyl-2-ethyl-1,3-propandiol, 18,9 Gew.-Teilen 1,1,1-Trimethylolpropan 26,9 Gew.-Teilen Adipinsäure wurden in einem Kolben eingewogen und bei Normaldruck langsam unter Rühren auf 200°C erwärmt, wobei ca. 5 Gew.-Teile Wasser abdestillierten, Nach Ende der Wasserabspaltung wurde im Verlauf von ca. 4 Stunden langsam Vakuum (15 mbar) angelegt und die Reaktion unter diesen Bedingungen innerhalb von weiteren ca. 15 Stunden vervollständigt, Das auf diese Weise erhaltene Polyesterpolyol wies die folgenden Kenndaten auf:

| | |
|---|---|
| OH-Zahl: | 512 mg KOH/g |
| Säurezahl : | 1,8 mg KOH/g |
| Viskosität (25°C): | 1900 mPa·s |
| OH-Funktionalität: | 2,36 |

### Polyesterpolyol B2)

7,2 Gew.-Teile Neopentylglykol, 12,3 Gew.-Teile 1,3-Butandiol, 44,8 Gew.-Teile 1,1,1-Trimethylolpropan, 20,8 Gew.-Teile Bernsteinsäure und 14,8 Gew.-Teile ε-Caprolacton wurde nach dem für B1) beschriebenen Verfahren ein Polyesterpolyol mit folgenden Kenndaten hergestellt:

| | |
|---|---|
| OH-Zahl: | 635 mg KOH/g |
| Säurezahl: | 0,16 mg KOH/g |
| Viskosität (25°C): | 2120 mPa·s |
| OH-Funktionalität: | 2,92 |
| freies ε-Caprolocton: | 0,04 % |

### Polyesterpolyol B3)

5,1 Gew.-Teile Neopentylglykol, 8,5 Gew.-Teile 1,3-Butandiol, 34,1 Gew.-Teile 1,1,1-Trimethylolpropan, 18,4 Gew.-Teile Bernsteinsäure und 11,5 Gew.-Teile ε-Caprolacton wurden in einem Kolben eingewogen und bei Normaldruck langsam unter Rühren auf 200°C erwärmt, wobei ca. 5 Gew.-Teile Wasser abdestillierten. Nach Ende der Wasserabspaltung wurde im Verlauf von ca. 4 Stunden langsam Vakuum (15 mbar) angelegt und die Reaktion unter diesen Bedingungen innerhalb von weiteren ca. 15 Stunden vervollständigt. Nach Abkühlen auf Raumtemperatur wurden weitere 8,4 Gew.-Teile Neopentylglykol und 14,0 Gew.-Teile 1,3-Butandiol eingerührt. Das auf diese Weise erhaltene Polyesterpolyol wies die folgenden Kenndaten auf:

| | |
|---|---|
| OH-Zahl: | 659 mg KOH/g |
| Säurezahl: | 1,30 mg KOH/g |
| Viskosität (25°C): | 2410 mPa·s |
| OH-Funktionalität: | 2,53 |
| freies ε-Caprolocton: | 0,05% |

### Polyesterpolyol B4)

Aus 9,6 Gew.-Teilen Neopentylglykol, 16,0 Gew.-Teilen 1,3-Butandiol, 30,6 Gew.-Teilen Glycerin, 30,1 Gew.-Teilen Adipinsäure und 13,7 Gew.-Teilen ε-Caprolacton wurde nach dem für B1) beschriebenen Verfahren ein Polyesterpolyol mit folgenden Kenndaten hergestellt:

| | |
|---|---|
| OH-Zahl: | 663 mg KOH/g |
| Säurezahl: | 0,18 mg KOH/g |
| Viskosität (25°C): | 1290 mPa·s |
| OH-Funktionalität; | 2,84 |
| freies ε-Caprolocton: | 0,06 % |

### Polyesterpolyol B5)

Aus 10,3 Gew.-Teilen 1,3-Butandiol, 6,3 Gew.-Teilen Diethylenglykol, 43,6 Gew.-Teilen 1,1,1-Trimethylolpropan, 18,6 Gew.-Teilen Bernsteinsäure und 13,2 Gew.-Teilen ε-Caprolacton sowie weiteren 4,9 Gew.-Teilen 1,3-Butandiol und 3,0 Gew.-Teilen Diethylenglykol wurde nach dem für B2) beschriebenen Verfahren ein Polyesterpolyol mit folgenden Kenndaten hergestellt:

| | |
|---|---|
| OH-Zahl: | 658 mg KOH/g |
| Säurezahl: | 1,40 mg KOH/g |
| Viskosität (25°C): | 2540 mPa.s |
| OH-Funktionalität; | 2,76 |
| Freies ε-Caprolocton: | 0,05 % |

### Herstellung transparenter Materialien (wobei Komponente B) ein Polyesterpolyol ist)

### (Beispiele 1 bis 8, Vergleichsbeispiele 1 und 2)

Zur Herstellung von transparenten Materialien wurden Komponente A) und Komponente B), welches ein Polyesterpolyol ist, in den in Tabelle 2 angegebenen Kombinationen und Mengenverhältnissen (Gew.-Teile), jeweils entsprechend einem Äquivalentverhältnis von Isocyanatgruppen zu Hydroxylgruppen von 1:1, mit Hilfe eines Speed-Mixers DAC 150 FVZ (Firma Hauschild, DE) 1 Min bei 3500 U/Min homogenisiert und anschließend von Hand bei Raumtemperatur in offene, nicht beheizte Polypropylen-Formen gegossen. Aufgrund der hohen Viskosität der Polyisocyanatkomponente A-VII bei Raumtemperatur wurde diese zur Erleichterung der Verarbeitbarkeit vor der Einwaage auf eine Temperatur von 60°C erwärmt (alle anderen Polyisocyanatkomponenten wurden bei Raumtemperatur verarbeitet). Nach einer Aushärtezeit von 8 Stunden bei 130°C in einem Trockenschrank wurden die Prüfplatten (Länge x Breite x Höhe: 200 mm x 100 mm x 4 mm) entformt.

Nach einer Nachhärtezeit von 24 Stunden bei Raumtemperatur wurden die Prüfplatten auf ihre optischen und mechanischen Eigenschaften getestet. Die Prüfergebnisse finden sich ebenfalls in Tabelle 2.

**Tabelle 2: optische und mechanische Eigenschaften der hergestellten Prüfplatten (Komponente B) ist Polyesterpolyol)**

| **Beispiel** | **a-1):a-2)** | **1** | **2** | **3** | **4** | **5** | **6** | **7** | **8** | **Vgl. 1** | **Vgl. 2** |
|---|---|---|---|---|---|---|---|---|---|---|---|
| Polyisocyanat A-I | 20:80 | 57,0 | - | 63,0 | 63,1 | - | - | - | - | - | - |
| Polyisocyanat A-II | 30:70 | - | 62,8 | - | - | - | - | - | - | - | - |
| Polyisocyanat A-III | 40:60 | - | - | - | - | 64,2 | - | - | - | - | - |
| Polyisocyanat A-V | 30:70 | - | - | - | - | - | 63,5 | - | - | - | - |
| Polyisocyanat A-VI | 20:80 | - | - | - | - | - | - | 62,5 | - | - | - |
| Polyisocyanat A-VII | 20:80 | - | - | - | - | - | - | - | 61,1 | - | - |
| Polyisocyanat A-VIII | 55:45 | - | - | - | - | - | - | - | - | - | 59,3 |
| Polyisocyanat a2 - I) | 0:100 | - | - | - | - | - | - | - | - | 56,1 | - |
| Polyesterpolyol B1) | | 43,0 | - | - | - | - | - | 37,5 | 38,9 | 43,9 | 40,7 |
| Polyesterpolyol B2) | | - | 37,2 | - | - | - | - | - | - | - | - |
| Polyesterpolyol B3) | | - | - | 37,0 | - | - | - | - | - | - | - |
| Polyesterpolyol B4) | | - | - | - | 36,9 | 35,8 | - | - | - | - | - |
| Polyesterpolyol B5) | | - | - | - | - | - | 36,5 | - | - | - | - |
| Dichte [g/cm³] | | 1,140 | 1,162 | 1,149 | 1,167 | 1,178 | 1,156 | 1,147 | 1,149 | 1,151 | 1,145 |
| Shore-Härte D | | 83 | 88 | 86 | 87 | 84 | 82 | 87 | 87 | 88 | 85 |
| Tg [°C] | | 93 | 111 | 115 | 124 | 109 | 117 | 103 | 118 | 133 | 70 |
| HDT [°C] | | 79 | 95 | 96 | 101 | 92 | 97 | 88 | n. b. | n. b. | 54 |
| Brechungsindex | | 1,5073 | 1,5080 | 1,5085 | 1,5015 | 1,5110 | 1,5110 | 1,5015 | 1,5092 | 1,5125 | 1,5105 |
| Abbe-Zahl | | 54 | 56 | 46 | 56 | 51 | 56 | 52 | 54 | 56 | 51 |
| Transmission [%] | | 93,2 | 93,4 | 93,2 | 93,0 | 93,9 | 92,6 | 93,2 | 93,3 | 93,0 | 93,0 |

Wie die Beispiele 1 bis 8 zeigen, liefern die erfindungsgemäßen Zusammensetzungen harte, hochtransparente Kunststoffe, die sich durch hohe Glasübergangstemperaturen und Wärmeformbeständigkeiten auszeichnen. Die zum Vergleich (Vgl. 1) unter Verwendung einer ausschließlich auf der Komponente a-2) auf Basis von IPDI hergestellte Prüfplatte war extrem spröde und zerbrach beim Entformen. Damit ist das entstandene Material für die Herstellung von Brillengläsern weniger geeignet. Die zum Vergleich (Vgl. 2) unter Verwendung einer mehr als erfindungsgemäß beanspruchten Menge an HDI-Polyisocyanat a-1) aufweisenden Polyisocyanatkomponente hergestellte Prüfplatte ist als Brillenglasmaterial aufgrund einer unzureichenden Glasübergangstemperatur und Wärmeformbeständigkeit nicht geeignet.

Der direkte Vergleich der Produkteigenschaften der erfindungsgemäß hergestellten Materialien der Beispiele 1 bis 7 mit denen von Polyallyldiglycolcarbonat, dem heutigen Standardmaterial zur Herstellung von Kunststoffbrillengläsern, (Tabelle 3) belegt die deutlichen Vorteile der neuen Materialien bezüglich mechanischer und thermischer Stabilität bei ebenfalls hervorragenden optischen Eigenschaften. Darüber hinaus ermöglicht die niedrigere Dichte der erfindungsgemäßen Polyurethane die Herstellung von Gläsern, die um mehr als 10 % leichter sind als solche aus PADC.

**Tabelle 3: Produkteigenschaften von Polyallyldiglycolcarbonat**

| | |
|---|---|
| Dichte [g/cm³] | 1,31 |
| Tg[°C] | 85 |
| HDT[°C] | 55 - 65 |
| Brechungsindex | 1,498 |
| Abbe-Zahl | 59,3 |
| Transmission [%] | 89 - 91 |

(Quelle: CR-39® Product Bulletin, Fa. PPG Industries Inc., Ausgabe 20. April 2006)

### Herstellung eines Brillenglasrohlings

Polyisocyanat A-I wurde mit 1,0 % Zelec® UN (saures Phosphatester-Trennmittel, Stepan Company, Northfield, IL, USA) sowie 0,5 % Tinuvin® 326 (UV-Schutzmittel, BASF Schweiz AG, Basel) versetzt und zur Entgasung bei 60°C und 40 mbar ca. 3 Stunden bis zum sichtbaren Ende der Schaumbildung gerührt. Polyesterpolyol B4) wurde auf die gleiche Weise ebenfalls entgast.

Nach Abkühlen auf Raumtemperatur wurden 63,4 Gew.-Teile des so vorbehandelten additivierten Polyisocyanats A-I mit 36,6 Gew.-Teilen des auf 40°C vortemperierten entgasten Polyesterpolyols B4), entsprechend einem Äquivalentverhältnis von Isocyanatgruppen zu Hydroxylgruppen von 1 : 1, in einem Rührgefäß gemischt und 30 min bei 40°C unter Vakuum (ca. 150 mbar) gerührt. Anschließend wurde das Reaktionsgemisch durch Beaufschlagung des Rührgefäßes mit einem Stickstoffüberdruck über eine mit einem Hahn versehene Leitung durch ein 0,5 *µ*m PTFE-Filter in eine gereinigte, aus zwei gläsernen Formschalen und einem polymeren Dichtring bestehende Gießform für einen Brillenglasrohling (Durchmesser 75 mm, Dicke 10 mm, -2 Dioptrien) gefördert. Die Gießform wurde in einem Wärmeschrank 2 Stunden bei 60°C gehalten, danach innerhalb von 3 Stunden kontinuierlich bis auf 115°C erwärmt und schließlich weitere 2 Stunden bei dieser Temperatur gehalten. Nach Abkühlen auf Raumtemperatur wurde der ausgehärtete Gießling von den Formschalen getrennt und zum Abbau von Materialspannungen für 3 Stunden bei 130°C nachgetempert.

Auf diese Weise wurde ein völlig klarer, transparenter und schlierenfreier Brillenglasrohling erhalten, der die in Beispiel 4 genannten optischen und mechanischen Eigenschaften zeigte. Die Transmission betrug bei einer Wellenlänge von 390 nm < 1 %, bei 400 nm 2 %, bei 410 nm 45 % und im Bereich oberhalb 450 nm 93 %.

### Komponente B) - Polyetherpolyole

### Polyetherpolyol B1)

Auf Trimethylolpropan gestarteter Polypropylenoxidpolyether einer OH-Zahl von 550 mg KOH/g und einer Viskosität (23°C) von 2000 mPas.

### Polyetherpolyol B2)

Auf Pentaerythrith gestarteter Polypropylenoxidpolyether einer OH-Zahl von 525 mg KOH/g und einer Viskosität (23 °C) von 2600 mPas.

### Polyetherpolyol B3)

Auf Ethylendiamin gestarteter Polypropylenoxidpolyether einer OH-Zahl von 470 mg KOH/g und einer Viskosität (23 °C) von 5400 mPas.

### Herstellung transparenter Materialien (wobei Komponente B) ein Polyetherpolyol ist)

### (Beispiele 9 bis 15, Vergleichsbeispiel 3)

Zur Herstellung von transparenten Materialien wurden Komponente A) und Komponente B), welche ein Polyetherpolyol ist, gegebenenfalls unter Mitverwendung von DBTL als Katalysator, in den in Tabelle 4 angegebenen Kombinationen und Mengenverhältnissen (Gew.-Teile), jeweils entsprechend einem Äquivalentverhältnis von Isocyanatgruppen zu Hydroxylgruppen von 1 : 1, mit Hilfe eines Speed-Mixers DAC 150 FVZ (Firma Hauschild, DE) 1 Min bei 3500 U/Min homogenisiert und anschließend von Hand in offene, nicht beheizte Polypropylen-Formen gegossen. Nach einer Aushärtezeit von 8 Stunden bei 100°C in einem Trockenschrank wurden die Prüfplatten (Länge x Breite x Höhe: 200 mm x 100 mm x 4 mm) entformt.

Nach einer Nachhärtezeit von 24 Stunden bei Raumtemperatur wurden die Prüfplatten auf ihre optischen und mechanischen Eigenschaften getestet. Die Prüfergebnisse finden sich ebenfalls in Tabelle 4.

**Tabelle 4: optische und mechanische Eigenschaften der hergestellten Prüfplatten (Komponente B) ist Polyetherpolyol)**

| **Beispiel** | **a-1);a-2)** | **9** | **10** | **111** | **12** | **13** | **14** | **15** | **Vgl. 3** |
|---|---|---|---|---|---|---|---|---|---|
| Polyisocyanat A-I | 20:80 | 58,7 | - | - | - | - | 57,5 | 54,9 | - |
| Polyisocyanat A-III | 40:60 | - | 60,0 | - | - | - | - | - | - |
| Polyisocyanat A-IV | 45:55 | - | - | 60,4 | - | - | - | - | - |
| Polyisocyanat A-V | 30:70 | - | - | - | 59,2 | - | - | - | - |
| Polyisocyanat A-VI | 20:80 | - | - | - | - | 57,9 | - | - | - |
| Polyisocyanat a2 - I) | 0:100 | - | - | - | - | - | - | - | 57,5 |
| Polyetherpolyol B1) | | 41,3 | 40,0 | 39,6 | 40,8 | - | - | - | 42,5 |
| Polyetherpolyol B2) | | - | - | - | - | 42,1 | 42,5 | - | - |
| Polyetherpolyol B3) | | - | - | - | - | - | - | 45,1 | - |
| DBTL | | - | - | - | - | 0,1 | 0,1 | - | - |
| Dichte [g/cm³] | | 1,121 | 1,127 | 1,122 | 1,126 | 1,128 | 1,122 | 1,103 | 1,121 |
| Shore-Härte D | | 87 | 85 | 86 | 86 | 85 | 88 | 86 | 84 |
| Tg [°C] | | 103 | 98 | 93 | 98 | 92 | 116 | 97 | 119 |
| HDT [°C] | | 89 | 83 | 82 | 82 | 79 | 92 | 83 | n.b. |
| Brechungsindex | | 1,500 | 1,502 | 1,493 | 1,501 | 1,499 | 1,500 | 1,504 | 1,505 |
| Abbe-Zahl | | 51 | 47 | 48 | 51 | 51 | 47 | 46 | 51 |
| Transmission [%] | | 93,6 | 93,3 | 93,3 | 93,5 | 93,2 | 93,3 | 92,4 | 93,1 |

Wie die Beispiele 9 bis 15 zeigen, liefern die erfindungsgemäßen Zusammensetzungen harte, hochtransparente Materialien, die sich durch hohe Glasübergangstemperaturen und Wärmeformbeständigkeiten auszeichnen. Die zum Vergleich (Vgl. 3) unter Verwendung einer ausschließlich auf der Komponente a-2] auf Basis von IPDI basierenden Komponente A) hergestellte Prüfplatte war extrem spröde und zerbrach beim Entformen. Daher ist das hergestellte Material insbesondere als Brillenglasmaterial weniger geeignet.

Der direkte Vergleich der Produkteigenschaften der erfindungsgemäß hergestellten Materialien der Beispiele 9 bis 15 mit denen von Polyallyldiglycolcarbonat, dem heutigen Standardmaterial zur Herstellung von Kunststoffbrillengläsern, (Tabelle 3) belegt die deutlichen Vorteile der neuen Materialien bezüglich mechanischer und thermischer Stabilität bei ebenfalls hervorragenden optischen Eigenschaften. Darüber hinaus ermöglicht die niedrigere Dichte der erfindungsgemäßen Polyurethane die Herstellung von Gläsern, die um mehr als 15 % leichter sind als solche aus PADC.

### Herstellung eines Brillenglasrohlings

Polyisocyanat A-I wurde mit 1,0 % Zelec® UN (saures Phosphatester-Trennmittel, Stepan Company, Northfield, IL, USA) sowie 0,5 % Tinuvin® 326 (UV-Schutzmittel, BASF Schweiz AG, Basel) versetzt und zur Entgasung bei 60°C und 40 mbar ca. 3 Stunden bis zum sichtbaren Ende der Schaumbildung gerührt. Polyetherpolyol B1) wurde auf die gleiche Weise ebenfalls entgast.

Nach Abkühlen auf Raumtemperatur wurden 59,3 Gew.-Teile des so vorbehandelten additivierten Polyisocyanats A-I mit 40,7 Gew.-Teilen des auf 45°C vortemperierten entgasten Polyetherpolyols B1). entsprechend einem Äquivalentverhältnis von Isocyanatgruppen zu Hydroxylgruppen von 1 : 1, in einem Rührgefäß gemischt und 30 min bei 40°C unter Vakuum (ca. 150 mbar) gerührt. Anschließend wurde das Reaktionsgemisch durch Beaufschlagung des Rührgefäßes mit einem Stickstoffüberdruck über eine mit einem Hahn versehene Leitung durch ein 0,5 *µ*m PTFE-Filter in eine gereinigte, aus zwei gläsernen Formschalen und einem polymeren Dichtring bestehende Gießform für einen Brillenglasrohling (Durchmesser 75 mm, Dicke 10 mm, -2 Dioptrien) gefördert. Die Gießform wurde in einem Wärmeschrank 2 Stunden bei 60°C gehalten, danach innerhalb von 3 Stunden kontinuierlich bis auf 115°C erwärmt und schließlich weitere 2 Stunden bei dieser Temperatur gehalten. Nach Abkühlen auf Raumtemperatur wurde der ausgehärtete Gießling von den Formschalen getrennt und zum Abbau von Materialspannungen für 3 Stunden bei 130°C nachgetempert.

Auf diese Weise wurde ein völlig klarer, transparenter und schlierenfreier Brillenglasrohling erhalten, der die in Beispiel 8 genannten optischen und mechanischen Eigenschaften zeigte. Die Transmission betrug bei einer Wellenlänge von 390 nm < 1 %, bei 400 nm 2 %, bei 410 nm 48 % und im Bereich oberhalb 450 nm 93 %.

## Patentansprüche

1. Verwendung einer Zusammensetzung, enthaltend
A) 10 bis weniger als 50 Gew.-% mindestens eines oligomeren Polyisocyanates a-1) auf Basis von Hexamethylendiisocyanat
und
mehr als 50 bis 90 Gew.-% mindestens eines Polyisocyanates a-2) auf Basis von Isophorondiisocyanat enthaltend monomeres Isophorondiisocyanat und mindestens ein oligomeres Polyisocyanat auf Basis von Isophorondiisocyanat,
wobei die %-Angaben auf die Summe der Komponenten a-1) und a-2) bezogen sind,
B) mindestens eine gegenüber Isocyanatgruppen reaktive Komponente, ausgewählt aus der Gruppe, bestehend aus Polyesterpolyol, Polyetherpolyol und Mischungen daraus,
sowie gegebenenfalls
C) ein oder mehrere Hilfs- und/oder Zusatzmittel
zur Herstellung einer optischen Linse.

2. Verwendung nach Anspruch 1, **dadurch gekennzeichnet, dass** die optische Linse ein Brillenglas ist.

3. Zusammensetzung, enthaltend
A) 10 bis weniger als 50 Gew.-% mindestens eines oligomeren Polyisocyanates a-1) auf Basis von Hexamethylendiisocyanat
und
mehr als 50 bis 90 Gew.-% mindestens eines Polyisocyanates a-2) auf Basis von Isophorondiisocyanat enthaltend monomeres Isophorondiisocyanat und mindestens ein oligomeres Polyisocyanat auf Basis von Isophorondiisocyanat, worin, bezogen auf die Masse, die Menge des monomeren Isophorondiisocyanates größer als die Menge des oligomeren Polyisocyanates auf Basis von Isophorondiisocyanat ist,
wobei die %-Angaben auf die Summe der Komponenten a-1) und a-2) bezogen sind,
B) mindestens eine gegenüber Isocyanatgruppen reaktive Komponente, ausgewählt aus der Gruppe, bestehend aus Polyesterpolyol, Polyetherpolyol und Mischungen daraus,
sowie gegebenenfalls
C) ein oder mehrere Hilfs- und/oder Zusatzmittel.

4. Zusammensetzung nach Anspruch 3, wobei die gegenüber Isocyanatgruppen reaktive Komponente frei von aromatischen Strukturen ist.

5. Zusammensetzung nach einem der Ansprüche 3 oder 4, wobei die gegenüber Isocyanatgruppen reaktive Komponente entweder Polyesterpolyole oder Polyetherpolyole umfasst.

6. Zusammensetzung nach einem der Ansprüche 3 bis 5, **dadurch gekennzeichnet, dass** mindestens ein Hilfs- und/oder Zusatzmittel C), ausgewählt aus der Gruppe, bestehend aus UV-Stabilisatoren, Katalysatoren, Antioxidantien, Formtrennmittel, Farbstoffen und Mischungen daraus verwendet wird.

7. Kit-of-parts umfassend die Komponenten A) und B) wie in den Ansprüchen 3 bis 6 definiert in räumlich getrennter Anordnung.

8. Verwendung der Zusammensetzung nach einem der Ansprüche 3 bis 6 zur Herstellung von Polyurethanen.

9. Verwendung nach Anspruch 8 zur Herstellung transparenter Materialien.

10. Verwendung nach Anspruch 9 zur Herstellung transparenter Formkörper.

11. Verwendung nach Anspruch 10, **dadurch gekennzeichnet, dass** der transparente Formkörper eine optische Linse ist.

12. Verwendung nach Anspruch 11, **dadurch gekennzeichnet, dass** die optische Linse ein Brillenglas ist.

13. Polyurethan, erhalten durch Härtung der Zusammensetzung nach einem der Ansprüche 3 bis 6.

14. Optische Linse, erhalten unter Verwendung der Zusammensetzung nach einem der Ansprüche 3 bis 6.

15. Verfahren zur Herstellung transparenter Materialien durch Härtung der Zusammensetzung nach einem der Ansprüche 3 bis 6.

## Claims

1. Use of a composition, comprising
A) 10 to less than 50 wt.-% of at least one oligomeric polyisocyanate a-1) based on hexamethylene diisocyanate
and
more than 50 to 90 wt.-% of at least one polyisocyanate a-2) based on isophorone diisocyanate containing monomeric isophorone diisocyanate and at least one oligomeric polyisocyanate based on isophorone diisocyanate,
wherein the %-data relate to the sum of components a-1) and a-2),
B) at least one isocyanate-reactive component, selected from the group consisting of polyester polyol, polyether polyol and mixtures thereof,
and optionally
C) one or more auxiliaries and/or additives
for preparing an optical lens.

2. Use according to claim 1 **characterized in that** the optical lens is a spectacle lens.

3. Composition, comprising
A) 10 to less than 50 wt.-% of at least one oligomeric polyisocyanate a-1) based on hexamethylene diisocyanate
and
more than 50 to 90 wt.-% of at least one polyisocyanate a-2) based on isophorone diisocyanate containing monomeric isophorone diisocyanate and at least one oligomeric polyisocyanate based on isophorone diisocyanate, wherein, relating to the mass, the amount of the monomeric isophorone diisocyanate is greater than the amount of the oligomeric polyisocyanate based on isophorone diisocyanate,
wherein the %-data relate to the sum of components a-1) and a-2),
B) at least one isocyanate-reactive component, selected from the group consisting of polyester polyol, polyether polyol and mixtures thereof,
and optionally
C) one or more auxiliaries and / or additives.

4. Composition according to claim 3 wherein the isocyanate-reactive component is free of aromatic structures.

5. Composition according to any one of claims 3 or 4 wherein the isocyanate-reactive component comprises either polyester polyols or polyether polyols.

6. Composition according to any one of claims 3 to 5, **characterized in that** at least one auxiliary and/or additive C), selected from the group consisting of UV-stabilizers, catalysts, antioxidants, mold release agents, dyes, and mixtures thereof is used.

7. Kit-of-parts comprising the components A) and B) as defined in the claims 3 to 6 in separated spatial arrangement.

8. Use of the composition according to any one of claims 3 to 6 for preparing polyurethanes.

9. Use according to claim 8 for preparing transparent materials.

10. Use according to claim 9 for preparing transparent molded articles.

11. Use according to claim 10, **characterized in that** the transparent molded article is an optical lens.

12. Use according to claim 1 1 , **characterized in that** the optical lens is a spectacle lens.

13. Polyurethane obtained by curing the composition according to any one of claims 3 to 6.

14. An optical lens obtained by using the composition according to any one of claims 3 to 6.

15. A process for the preparation of transparent materials by curing the composition according to any one of claims 3 to 6.

## Revendications

1. Utilisation d'une composition, comprenant
A) 10% à moins de 50% en poids d'au moins un oligomère polyisocyanate a-1) à base de diisocyanate d'hexaméthylène
et
plus de 50% à 90% en poids d'au moins un polyisocyanate a-2) à base de diisocyanate d'isophorone contenant un monomère de diisocyanate d'isophorone et au moins un oligomère polyisocyanate à base de diisocyanate d'isophorone,
dans laquelle les données en % se rapportent à la somme des composants a-1) et a-2),
B) au moins un composant réactif avec les isocyanates, choisi dans le groupe constitué des polyesters polyols, des polyéthers polyols et des mélanges de ceux-ci,
et éventuellement
C) un ou plusieurs auxiliaire(s) et/ou additif(s)
pour la préparation d'une lentille optique.

2. Utilisation selon la revendication 1, **caractérisée en ce que** la lentille optique est un verre de lunettes.

3. Composition, comprenant
A) 10% à moins de 50% en poids d'au moins d'un oligomère polyisocyanate a-1) à base de diisocyanate d'hexaméthylène
et
plus de 50% à 90% en poids d'au moins un polyisocyanate a-2] à base de diisocyanate d'isophorone contenant un monomère de diisocyanate d'isophorone et au moins un oligomère de polyisocyanate à base de diisocyanate d'isophorone, où, par rapport à la masse, la quantité du monomère de diisocyanate d'isophorone est supérieure à la quantité de l'oligomère de polyisocyanate à base de diisocyanate d'isophorone,
dans laquelle les données en % se rapportent à la somme des composants a-1) et a-2),
B) au moins un composant réactif avec les isocyanates, choisi dans le groupe constitué des polyesters polyols, de polyéthers polyols et de mélanges de ceux-ci,
et éventuellement
C) un ou plusieurs auxiliaire(s) et/ou additif(s).

4. Composition selon la revendication 3, dans laquelle le composant réactif avec les isocyanates est exempt de structure aromatique.

5. Composition selon l'une quelconque des revendications 3 ou 4, dans laquelle le composant réactif avec les isocyanates comprend des polyesters polyols ou des polyéther polyols.

6. Composition selon l'une quelconque des revendications 3 à 5, **caractérisée en ce qu'**au moins un auxiliaire et/ou additif C), choisi dans le groupe constitué de stabilisants UV, de catalyseurs, d'antioxydants, d'agents de démoulage, de colorants et de mélanges de ceux-ci est utilisé.

7. Kit d'élélemtns comprenant les composants A) et B) tels que définis dans les revendications 3 à 6 dans un agencement spatial séparé.

8. Utilisation de la composition selon l'une quelconque des revendications 3 à 6 pour la préparation de polyuréthanes.

9. Utilisation selon la revendication 8 pour la préparation de matériaux transparents.

10. Utilisation selon la revendication 9 pour la préparation d'articles moulés transparents.

11. Utilisation selon la revendication 10, **caractérisée en ce que** l'article moulé transparent est une lentille optique.

12. Utilisation selon la revendication 11, **caractérisée en ce que** la lentille optique est un verre de lunettes.

13. Polyuréthane obtenu par durcissement de la composition selon l'une quelconque des revendications 3 à 6.

14. Lentille optique obtenue en utilisant la composition selon l'une quelconque des revendications 3 à 6.

15. Procédé pour la préparation de matériaux transparents par durcissement de la composition selon l'une quelconque des revendications 3 à 6.
